# EUROPÄISCHE PATENTSCHRIFT

(11) **EP 0 568 860 B1**
(45) Veröffentlichungstag und Bekanntmachung des Hinweises auf die Patenterteilung: **20.11.1996**
(21) Anmeldenummer: 93106462.0
(22) Anmeldetag: 21.04.1993
(51) Int. Cl.: C09B 62/04, C09B 62/503

(54) **Reaktivfarbstoffe, deren Herstellung und Verwendung**
Reactive dyes, their manufacture and their use
Colorants réactifs, leur préparation et leur utilisation

(30) Priorität: 04.05.1992 DE 4214740
(43) Veröffentlichungstag der Anmeldung: 10.11.1993
(73) Patentinhaber: BAYER AG, 51368 Leverkusen (DE)
(72) Erfinder: Hoppe, Manfred, Dr., W-5067 Kürten-Bechen (DE); Bock, Eckhard, W-5067 Kürten-Bechen (DE); Reddig, Wolfram, Dr., W-5060 Bergisch Gladbach (DE); Eizenhöfer, Thomas, Dr., W-5000 Köln 60 (DE); Harms, Wolfgang, Dr., W-5068 Odenthal (DE); Herd, Karl-Josef, Dr., W-5068 Odenthal-Holz (DE)

(56) Entgegenhaltungen:
- EP-A- 0 094 055
- EP-A- 0 318 968

## Beschreibung

Die Erfindung betrifft neue Reaktivfarbstoffe mit einem Triazin- und einem speziellen Vinylsulfonrest, ein Verfahren zu ihrer Herstellung und deren Verwendung.

Bifunktionelle Reaktivfarbstoffe mit einem Halogentriazin und einem Vinylsulfonrest sind bereits bekannt, beispielsweise aus der DE-A-2 614 550, EP-A-70 806, EP-A-70 807 und EP-A-74 928. Die bekannten bifunktionellen Reaktivfarbstoffe weisen noch diverse anwendungstechnische Nachteile auf, insbesondere hinsichtlich des erreichbaren Fixiergrades.

Die vorliegende Erfindung betrifft neue Reaktivfarbstoffe, die in Form der freien Säure folgender Formel entsprechen 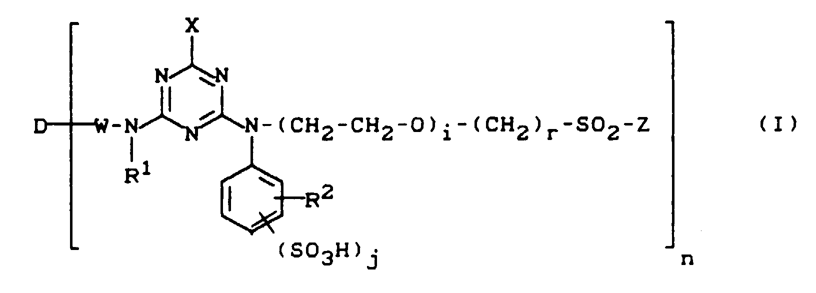 worin
- D =: Rest eines organischen Farbstoffes aus der Anthrachinon-, Phthalocyanin-, Formazan-, Azomethin-, Dioxazin-, Phenazin-, Stilben-, Triphenylmethan-, Xanthen-, Thioxanthon- oder Nitroarylreihe.
- W =: eine direkte Bindung oder Brückenglied
- R¹ =: H, CH₃ oder C₂H₅
- R² =: H, C₁-C₄-Alkyl, Cl, Br, C₁-C₄-Alkoxy oder COOH
- i =: 0 oder 1
- j =: 0, 1 oder 2
- r =: 2 oder 3
- X =: F, Cl oder Br
- Z =: -CH=CH₂, -CH₂-CH₂-OSO₃H, -CH₂-CH₂-S₂O₃H, -CH₂-CH₂-O-CO-CH₃, -CH₂-CH₂-OPO₃H₂, -CH₂-CH₂-OH,
- n =: 1 oder 2.

Als Rest D eines organischen Farbstoffs kommt besonders ein solcher in Frage, der eine oder mehrere wasserlöslichmachende Gruppen, insbesondere Sulfogruppen enthält und/oder keinen weiteren faserreaktiven Rest aufweist.

X ist insbesondere F oder Cl.

Für die in der vorliegenden Anmeldung genannten Alkyl-, Aryl-, Aralkyl-, Hetaryl-, Alkoxy-, Halogen und Acylaminoreste sowie für die Brückenglieder gilt folgendes:

Unter Alkylgruppen werden insbesondere solche mit 1 bis 4 C-Atomen verstanden, die gegebenenfalls Substituenten aufweisen können, beispielsweise Halogen wie Cl oder Br, OH, CN oder OSO₃H.

Unter Alkoxyresten werden insbesondere solche mit 1 bis 4 C-Atomen verstanden.

Unter Halogen wird insbesondere Chlor oder Fluor verstanden.

Unter Acylaminoresten werden insbesondere solche mit 1 bis 4 C-Atomen verstanden, wie Formylamino, Acetylamino, Propionylamino, n-Butyrylamino.

Geeignete Brückenglieder W sind beispielsweise: 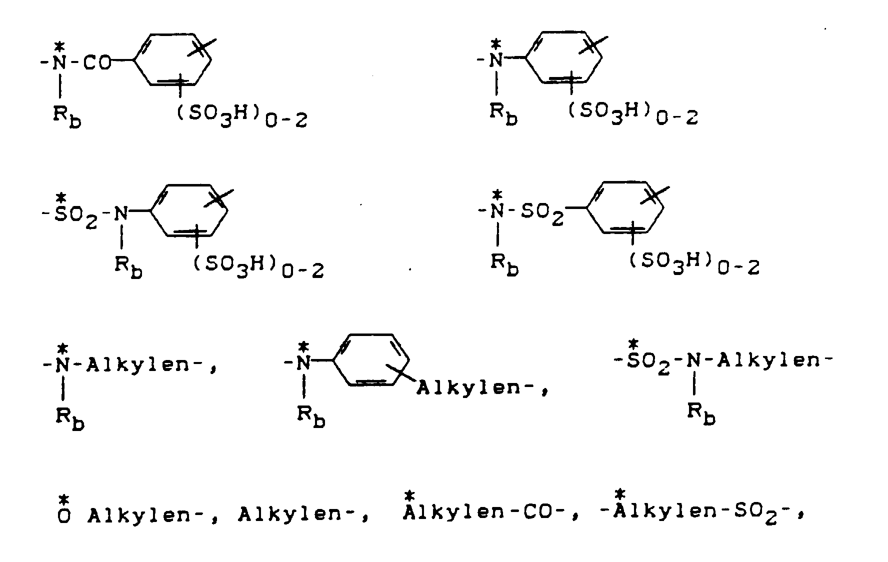 wobei ∗ das Atom beziehungsweise die Gruppe kennzeichnet, welches mit dem Chromophor D verbunden ist und
wobei R_{b} für Wasserstoff oder C₁-C₄-Alkyl steht.

Die vorliegende Erfindung betrifft weiterhin die Herstellung der Reaktivfarbstoffe der Formel (1) nach an sich bekannten Methoden:
a) entweder durch Kondensation von Farbstoffen der Formel 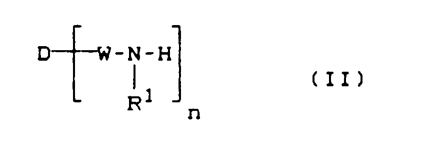 worin
   D, W, R¹ und n die oben angegebene Bedeutung haben, mit n-Molen Trihalogentriazinen der Formel 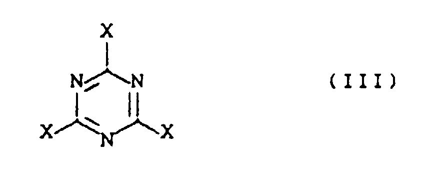 zu Verbindungen der Formel 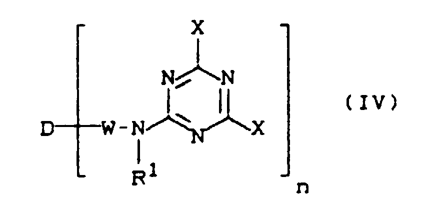 und weitere Kondensation der Verbindungen der Formel (IV) mit nMolen der Komponenten der Formel 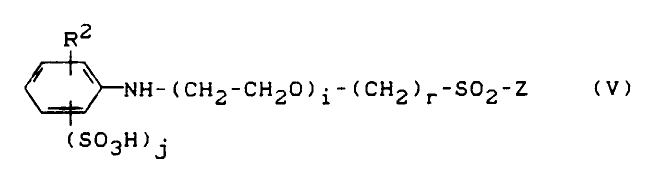 worin
   R², i, j, r, X und Z die oben angegebene Bedeutung haben,
   oder
b) in umgekehrter Reihenfolge durch Kondensation von Trihalogentriazinen der Formel (III) mit den Komponenten der Formel (V) zu den Primärkondensationsprodukten 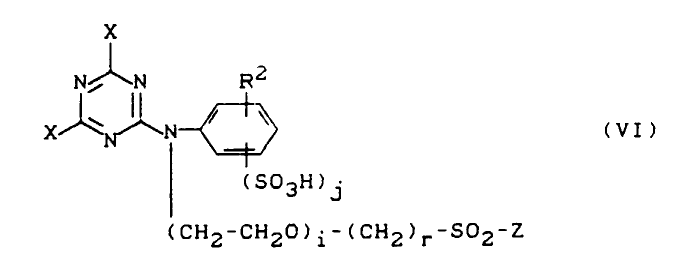 worin
   X, i, R², j, r und Z die oben angegebene Bedeutung haben, und weitere Kondensation von nMolen der Verbindungen der Formel (VI) mit den Farbstoffen der Formel (II), oder
c) durch Kondensation geeigneter Vorprodukte mit den Trihalogentriazinen (III) und den Komponenten der Formel (V) beziehungsweise durch Kondensation geeigneter Vorprodukte mit den Primärkondensationsprodukten der Formel (VI) und anschließender Farbstoffsynthese.

Die Erfindung betrifft weiterhin Verbindungen (V) sowie ein Verfahren zur Herstellung von Verbindungen (V) und zu ihrer Herstellung nützliche Zwischenprodukte der allgemeinen Formel 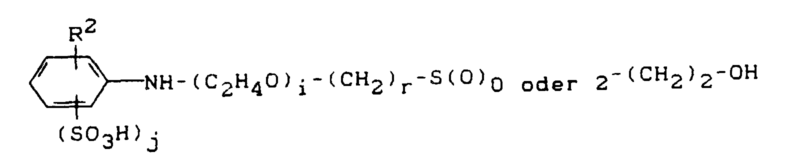 einschließlich ihrer Salze und ihrer Umsetzungsprodukte mit Schutzgruppen,
worin R², Z, j, r die unter Formel (I) angegebene Bedeutung haben,
mit Ausnahme der Verbindung 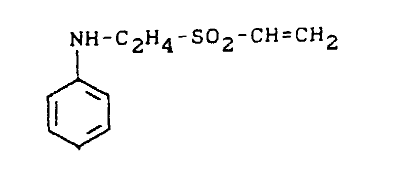 die von D. Feldman und I. Negulescu in Bul. Inst. Politeh. Iasi 16 (1970) 213-220 (CA 75: 119130f) und von I. Negulescu in RO 59096 vom 15. Nov. 1973 (CA 81: 50515q) als Monomer in einem Acrylnitril-Vinylsulfon-Copolymer beschrieben wird.

Besonders bevorzugt sind Verbindungen, worin bedeuten
R² H
j,i O
r 2.

Die Verbindungen der Formel (V) lassen sich herstellen durch Sulfatieren von Verbindungen der Formel 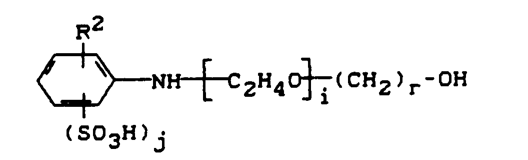 anschließende Umsetzung mit Mercaptoethanol unter Erhalt von 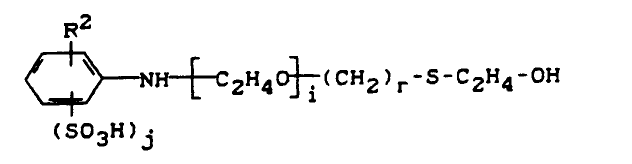 gegebenenfalls Blockierung der NH-Gruppe mit einer Schutzgruppe, insbesondere Acetyl und Oxidation, insbesondere mit H₂O₂ zu 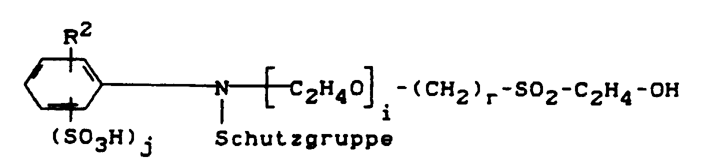 gegebenenfalls Abspalten von der Schutzgruppe unter Erhalt von 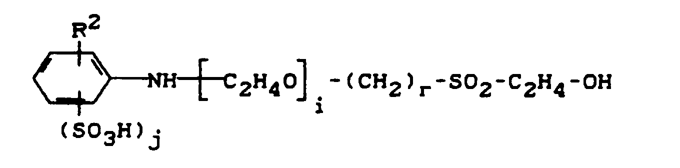 und gegebenenfalls übliche Überführung des Restes SO₂C₂H₄-OH in die Vinylsulfonylgruppe oder Überführung der -CH₂-CH₂-OH Gruppe in die übrigen unter Z aufgeführten abspaltbaren Gruppen.

Die Kondensationen der Ausgangskomponenten mit den Trihalogentriazinen erfolgen unabhängig von der Reihenfolge in wäßrigem oder organisch-wäßrigen Medien in Anwesenheit von säurebindenden Mitteln. In Abhängigkeit von der Natur der Ausgangskomponenten erfolgt dabei die erste Stufe der Kondensation in pH-Bereichen von 2 bis 8, vorzugsweise 3 bis 7, und bei Temperaturen von 0 bis 40°C, vorzugsweise 0 bis 25°C. Der Austausch des zweiten Halogenatoms des Triazins vollzieht sich im pH-Bereich von 4 bis 10, vorzugsweise 5 bis 9, und im Temperaturbereich von 0 bis 60°C, vorzugsweise 0 bis 30°C.

Säurebindende Mittel sind beispielsweise Carbonate, Hydroxide oder Phosphate wie Natriumcarbonat, Natriumhydrogencarbonat, verdünnte Natronlauge, Di- oder Trinatriumphosphat oder Natriumfluorid.

Soll die Kondensation beziehungsweise die Farbstoffsynthese direkt zu einer Farbstofflösung beziehungsweise zu einer flüssigen Farbstoffpräparation führen, kann die Verwendung von Lithiumcarbonaten oder Lithiumhydroxid vorteilhaft sein, gegebenenfalls zusammen mit Lösungsvermittlern und/oder stabilisierenden Puffersystemen. Andere Umwandlungsreaktionen der Farbstoffe oder deren Vorprodukte wie Metallisierungsreaktionen, Sulfierungen oder Einführung von Acylaminogruppierungen können im allgemeinen in beliebigen Stufen der Farbstoffsynthesen vorgenommen werden.

Besonders wertvolle Farbstoffe dieser Reihe sind wasserlösliche Formazan-, Anthrachinon- und Phthalocyanin-Farbstoffe, und insbesondere solche, die Sulfonsäure- und/oder Carbonsäuregruppen aufweisen. Die Farbstoffe können sowohl metallfrei als auch metallhaltig sein, wobei unter den Metallkomplexen die Kupfer-, Nickel-, Chrom- und Kobalt-Komplexe bevorzugtes Interesse besitzen.

Geeignete Farbstoffreste D beziehungsweise die den Farbstoffen der Formel (I) zugrundeliegenden aminogruppenhaltigen Farbstoffe sind in der Literatur in sehr großer Zahl beschrieben. Beispielhaft seien hier erwähnt:

EP-A 54 515, EP-A 69 703, EP-A 70 807, DE-A 3 222 726, DE-A 2 650 555, DE-A 3 023 855, DE-A 2 847 938, DE-A 2 817 780, GB-A 2 057 479, DE-A 2 916 715, DE-A 2 814 206, DE-A 3 019 936, EP-A 45 488 sowie Venkataraman; The Chemistry of Synthetic Dyes, BD. VI, Kapitel II, S. 211-325, New York, London; 1972.

Bevorzugt sind Reaktivfarbstoffe, die in Form der freien Säure folgender Formel entsprechen 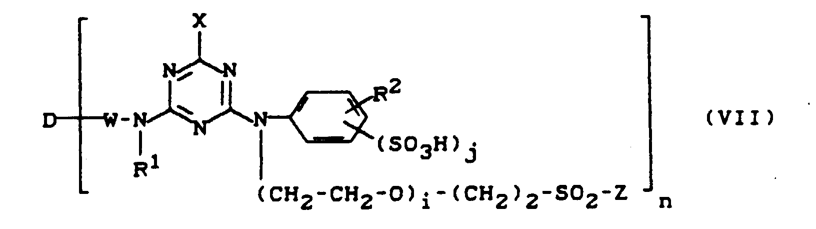 worin
- D =: Rest eines organischen Farbstoffes aus der Anthrachinon-, Phthalocyanin-, Formazan-, Azomethin-, Dioxazin-, Phenazin-, Stilben-, Triphenylmethan-, Xanthen-, Thioxanthon- oder Nitroarylreihe. Insbesondere kommt als Rest eines organischen Farbstoffs ein solcher in Frage, der eine oder mehrere wasserlöslichmachende Gruppen, insbesondere Sulfogruppen aber keine weitere faserreaktiven Reste enthält.
- R¹ =: H oder CH₃, C₂H₅
- R² =: H, oder CH₃, C₂H₅
- W =: direkte Bindung oder Brückenglied
- i =: 0 oder 1
- j =: 0 oder 1
- X =: F oder Cl
- Z =: CH₂-CH₂-OSO₃H, CH=CH₂
- n =: 1 oder 2 ist.

Besonders bevorzugt sind Reaktivfarbstoffe, die in Form der freien Säure folgender Formel entsprechen 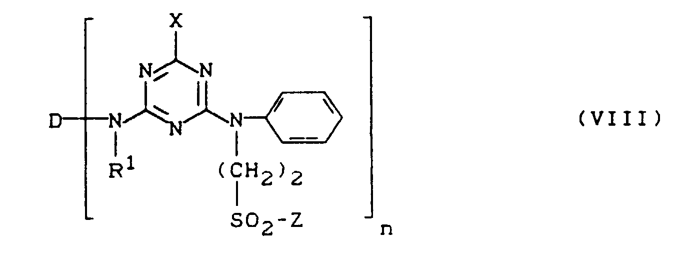 worin
- D =: Rest eines organischen Farbstoffes aus der Anthrachinon-, Phthalocyanin-, Formazan- oder Dioxazinreihe ist, der keine weiteren faserreaktiven Gruppen enthält.
- X =: F, Cl,
- Z =: -CH₂-CH₂-OSO₃H,
- R¹ =: H, CH₃ oder C₂H₅,
- n =: 1 ist.

Bevorzugte Farbstoffe sind die der folgenden Formeln (1) bis (52), worin generell B einen Rest der Formel 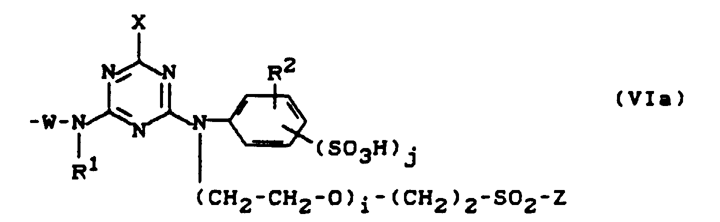 beinhaltet und W, R¹, X, i, R², j und Z die oben angegebene Bedeutung haben. 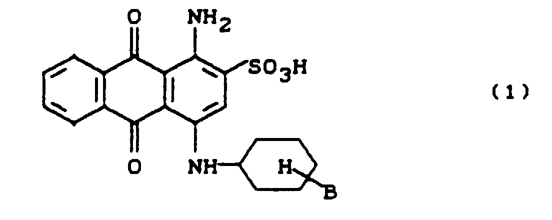 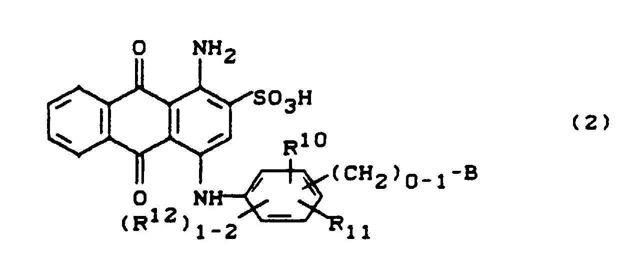 worin
- R¹⁰ =: H, Methyl, Methoxy, Chlor
- R¹¹ =: H, SO₃H und
- R¹² =: H, Methyl oder Ethyl. 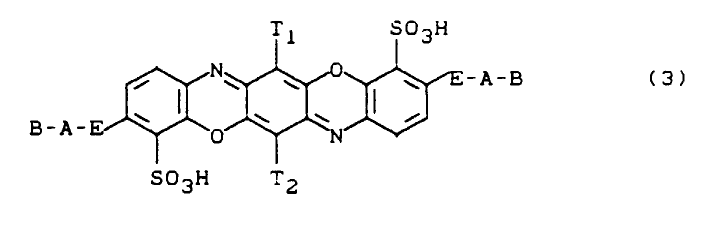
worin
- A =: für ein gegebenenfalls substituiertes Phenylen oder ein gegebenenfalls substituiertes aromatisch-aliphatisches Brückenglied oder für ein gegebenenfalls durch Heteroatome wie NR¹³, 0 oder S enthaltende Gruppierungen unterbrochenes, geradkettiges oder verzweigtes C₁-C₆-Alkylen, das mit C₁-C₆-Alkoxy, OSO₃H, SO₃H, COOR oder Halogen substituiert sein kann, steht
und wobei innerhalb eines Brückengliedes A die Gruppe NR¹³ mit der Gruppe NR_{b} auch einen heterocyclischen aliphatischen Ring bilden kann, insbesondere 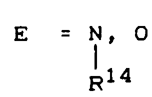 und
- T₁, T₂ =: unabhängig voneinander H, Cl, Br, C₁-C₂-Alkyl, OCH₃, OC₂H₅, Acylamino, C₁-C₂-Alkoxycarbonyl ist,
- R¹³, R¹⁴ =: unabhängig voneinander H, C₁-C₄-Alkyl, das durch OR, OSO₃H, SO₃H, COOR oder Halogen substituiert sein kann
- R =: H, CH₃ oder C₂H₅. 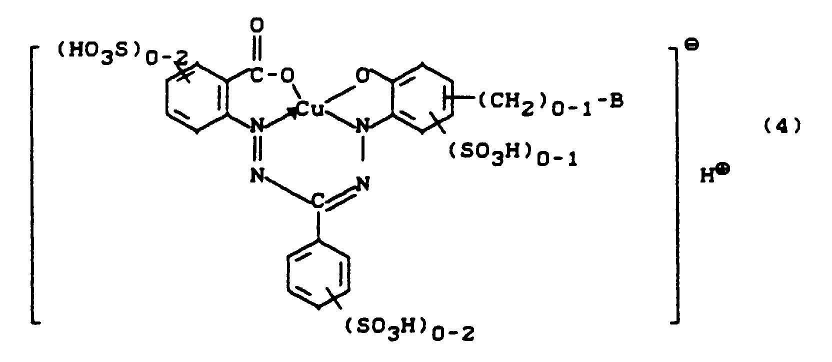 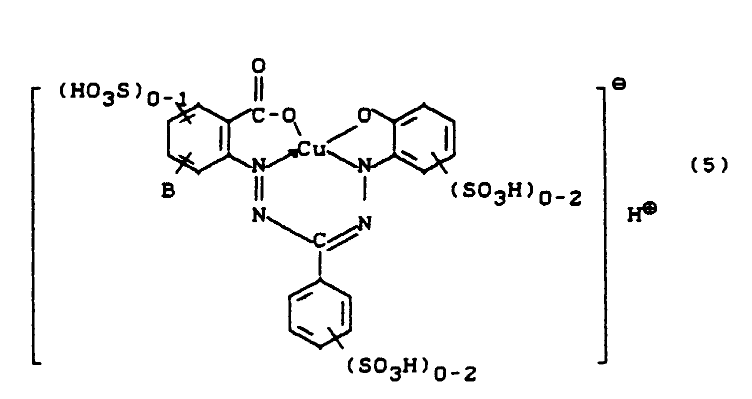 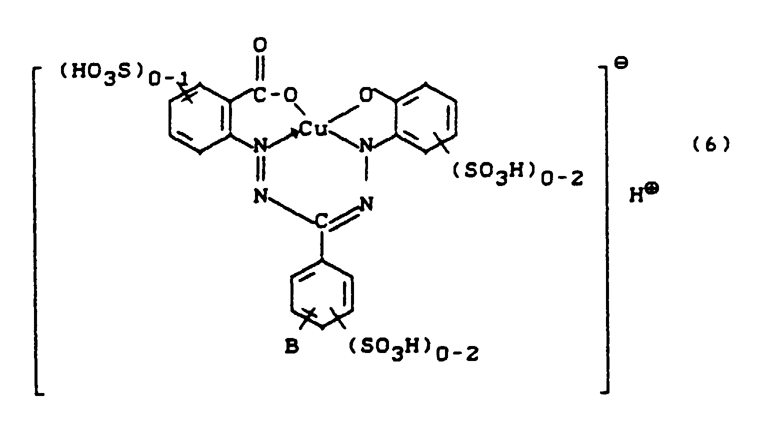 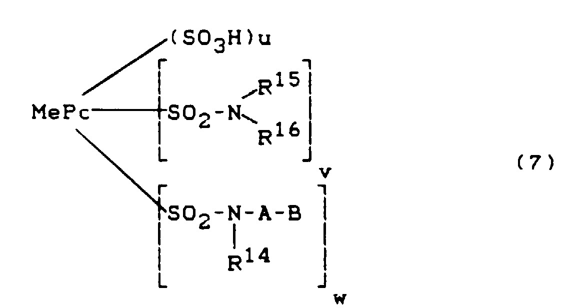
worin
- Me =: Cu, Ni,
- Pc =: Rest eines Phthalocyanins
- u+v+w =: 3,4 - 4,0, mit der Maßgabe, daß
- u =: 0,8 - 2,0,
- v =: 0 - 1,0,
- w =: 1,0 - 3,0 ist und

- A: die oben angegebene Bedeutung hat,
- R¹⁴: die oben angegebene Bedeutung hat,
- R¹⁵ und R¹⁶ =: H, C₁-C₂-Alkyl, gegebenenfalls substituiert durch OH, OSO₃H, SO₃H oder COOH ist. 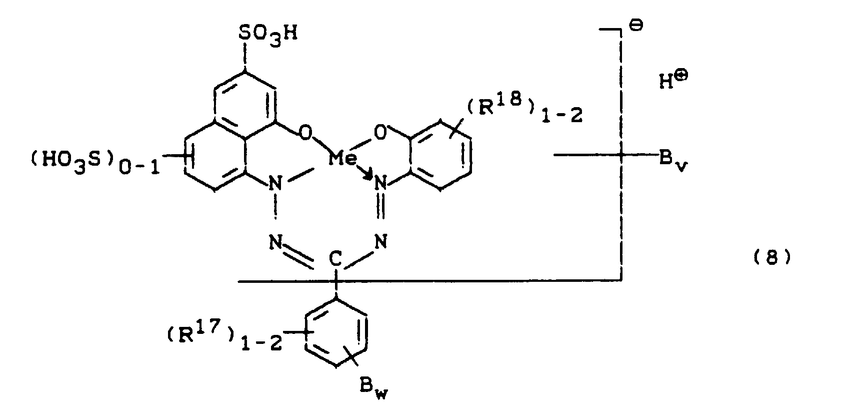 worin
- v, w =: 0 oder 1, wobei w ungleich v ist,
- R¹⁸, R¹⁷ =: unabhängig voneinander H, C₁-C₄-Alkyl, C₁-C₄-Alkoxy, OH, Halogen, COOH, NO₂, SO₃H, Sulfonamido, C₁-C₄-Alkylcarbonylamino, gegebenenfalls substituiertes Phenylcarbonylamino, C₁-C₄-Alkylsulfonylamino, gegebenenfalls substituiertes Phenylsulfonylamino.

In einer besonders bevorzugten Ausführungsform in den Formeln (1) bis (8) bedeutet W eine einfache Bindung.

Die Reaktivfarbstoffe der Formel (I) eignen sich zum Färben und Bedrucken der verschiedensten Substrate wie Seide, Leder, Wolle, synthetischen Polyamidfasern, insbesondere aber cellulosehaltiger Materialien faseriger Struktur wie Leinen, Zellstoff, regenerierte Zellulose und vor allem Baumwolle. Sie eignen sich sowohl für das Ausziehverfahren als auch zum Färben nach den üblichen Foulardfärbeverfahren, wonach die Ware mit wäßrigen und gegebenenfalls auch salzhaltigen Farbstofflösungen imprägniert wird, und die Farbstoffe nach einer Alkalibehandlung oder in Gegenwart von Alkali, gegebenenfalls unter Wärmeeinwirkung fixiert werden.

Die Reaktivfarbstoffe der Formel (I) zeichnen sich durch hohe Reaktivität und ausgezeichnetes Fixiervermögen aus. Aufgrund ihrer Bifunktionalität ergeben sich auch aus langer Flotte hohe Fixierausbeuten. Sie sind charakterisiert durch relative Unabhängigkeit der Ergiebigkeit von der Färbetemperatur und können daher nach dem Ausziehverfahren bei niedrigen bis mittleren Färbetemperaturen eingesetzt werden. Beim Klotz-Dämpf-Verfahren erfordern sie nur kurze Dämpfzeiten. Sie ergeben Färbungen hoher Farbstärke mit guten Licht- und Naßechtheiten.

### Beispiel 1

A) 0,15 Mol der Verbindung der Formel (Herstellung s. Beispiel 38 ff) 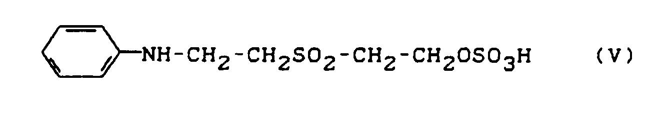 werden mit 100 Teilen Wasser und 100 Teilen Eis vermischt und mit Na₂CO₃ neutral gestellt. Zu dieser Lösung werden in 10 min bei 0°C 0,17 Mol 2,4,6-Trifluor-1,3,5-triazin zugetropft und der pH bei 4,5 bis 5 gehalten. Man erhält 250 Teile einer Kondensationslösung folgender Verbindung 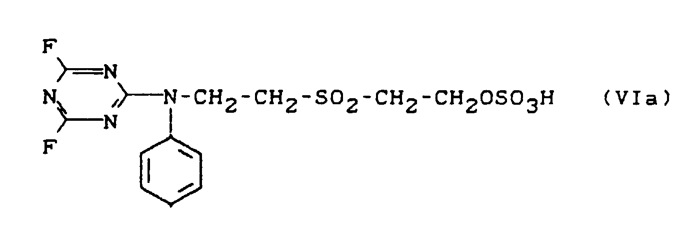
B) 0,1 Mole des Kupferkomplexes von N-(2-Carboxy-5-sulfophenyl)-N'-(2'-hydroxy-3'-amino-5'-sulfophenyl)-ms-phenyl-formazan-di-natriumsalz werden in 600 ml Wasser gelöst. Nach Abkühlung auf 0 bis 5°C läßt man die Lösung der in Beispiel 1A hergestellten Komponente zulaufen und hält den pH-Wert durch Zugabe von Sodalösung auf 7,0 bis 8,0. Nach 2 Stunden läßt man die Temperatur allmählich auf 20°C ansteigen und salzt nach beendeter Kondensation den Farbstoff aus, saugt ab und trocknet ihn nach Pufferung bei pH 6 bei 45°C im Vakuum.

Der Farbstoff entspricht der Formel 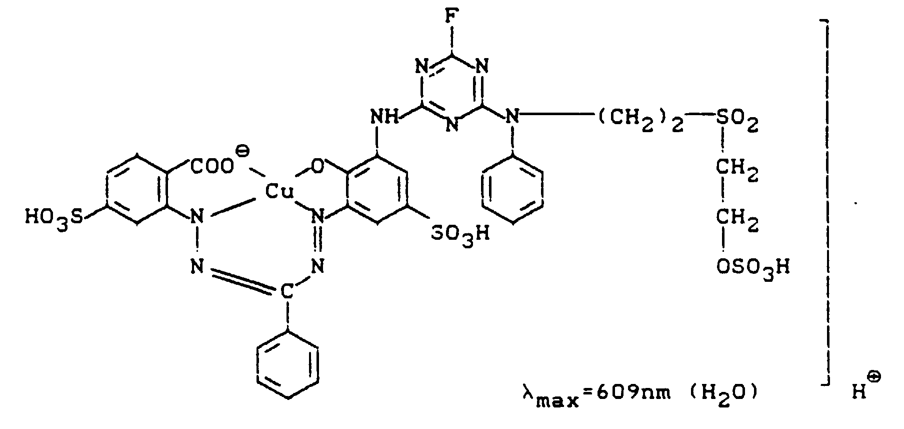 und färbt Baumwolle aus langer Flotte mit sehr guten Fixierausbeuten in blauen Tönen.

Weitere blaue Formazanfarbstoffe erhält man durch Kondensation der folgenden Komponenten:

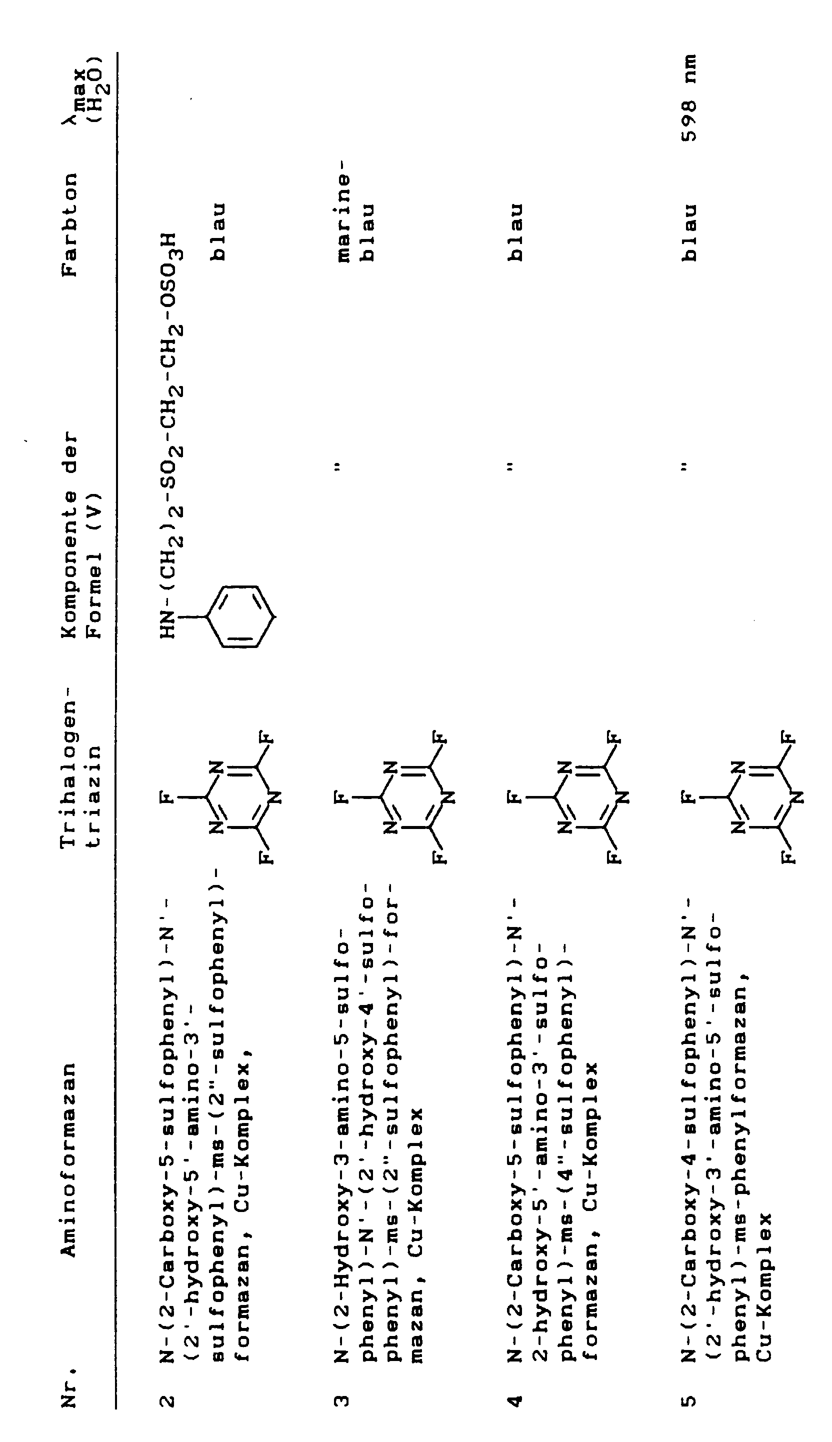

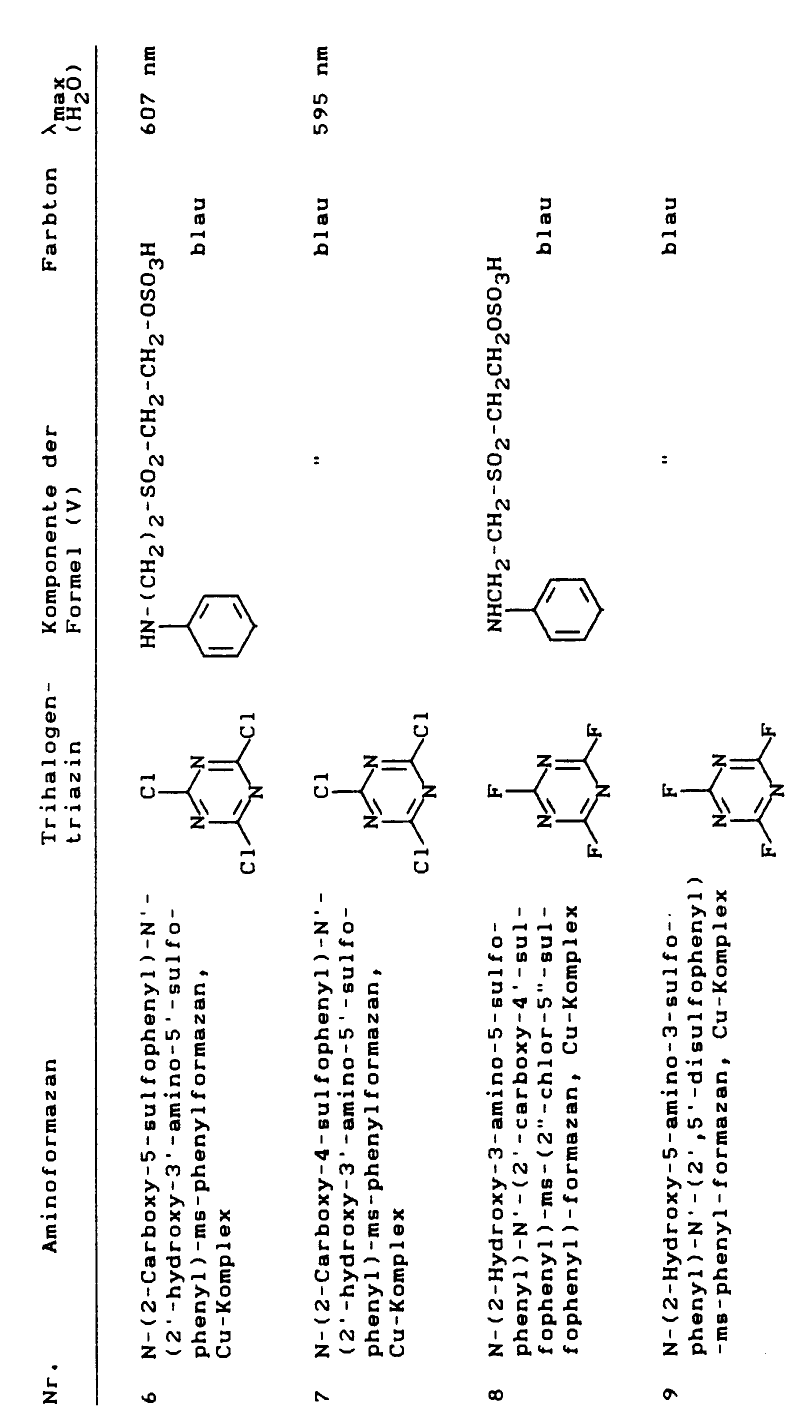

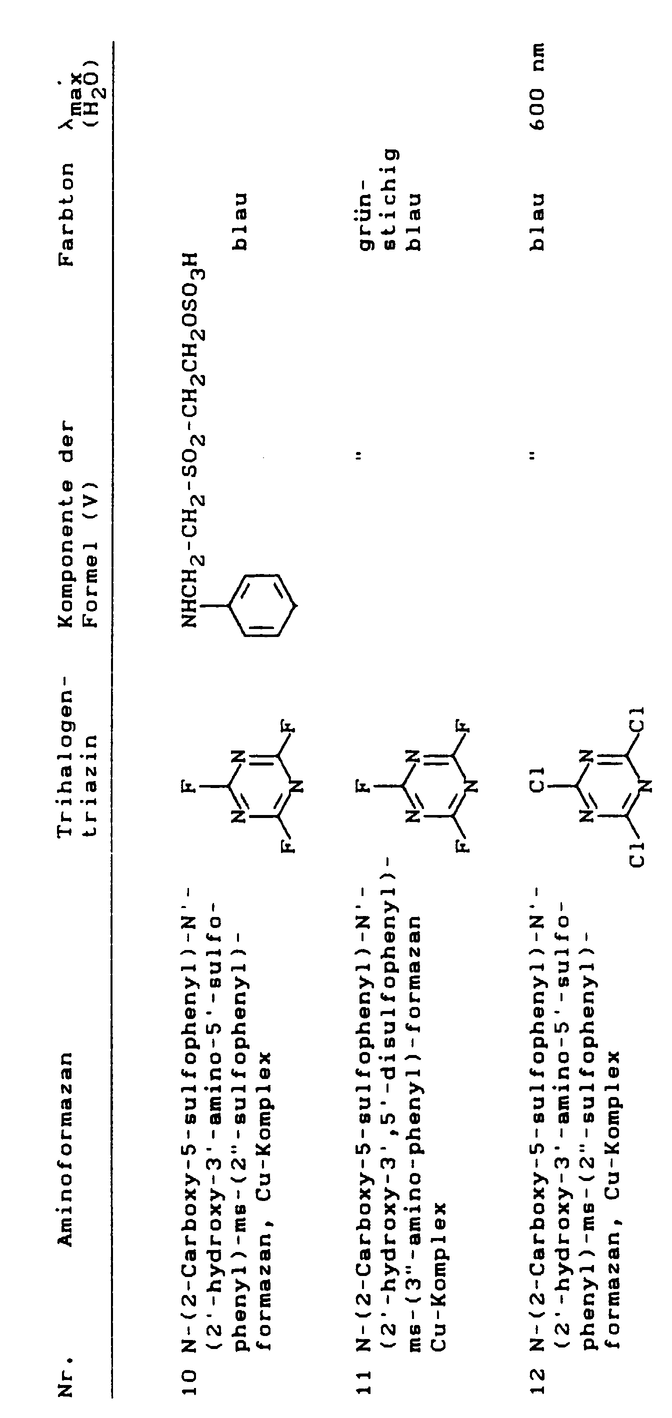

### Beispiel 13

0,1 Mol des Anthrachinons der Formel 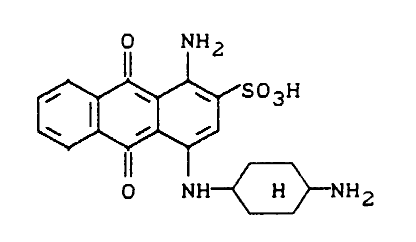 wurden in ca. 1.000 Teilen Wasser mit Kaliumhydroxydlösung bei einem pH-Wert von 12 bis 13 gelöst. Die Farbstofflösung wurde geklärt und mit 200 Teilen Hexahydro-2H-azepin-2-on versetzt. Innerhalb von 1 Stunde tropfte man 0,15 Mol der in Beispiel 1A hergestellten Kondensationlösung zu und hielt bei 20°C einen pH-Wert von 8 bis 9. Die Reaktion war nach 8 Stunden zum größten Teil beendet. Der Farbstoff wurde mit Ethanol ausgefällt, isoliert und getrocknet. Man erhielt ca. 200 g eines Reaktivfarbstoffes der Formel 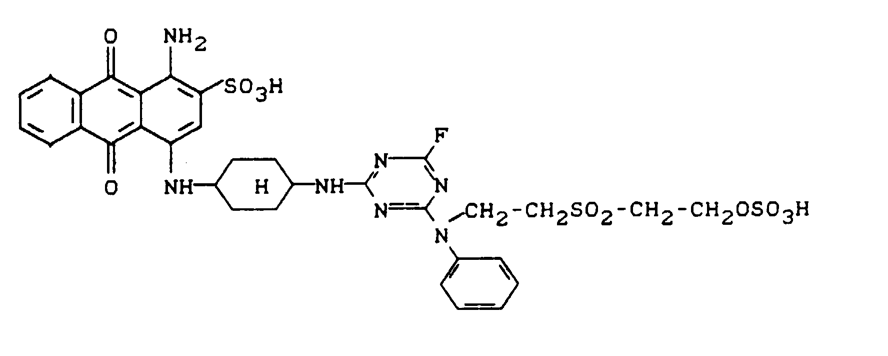 (λmax = 594 und 640 nm (H₂O)) welcher Baumwolle nach den für Reaktivfarbstoffe üblichen Färbe- oder Druckverfahren in blauen Farbtönen färbt.

Weitere blaue Anthrachinonfarbstoffe mit ähnlichen Eigenschaften werden erhalten, wenn man die nachfolgend aufgeführten Anthrachinonkomponenten der allgemeinen Formel 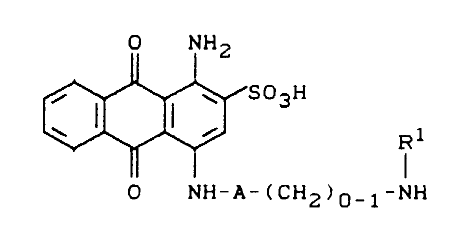 mit den Trihalogentriazinen und den Komponenten der Formel (V) nach einer der oben dargelegten Methoden kondensiert.

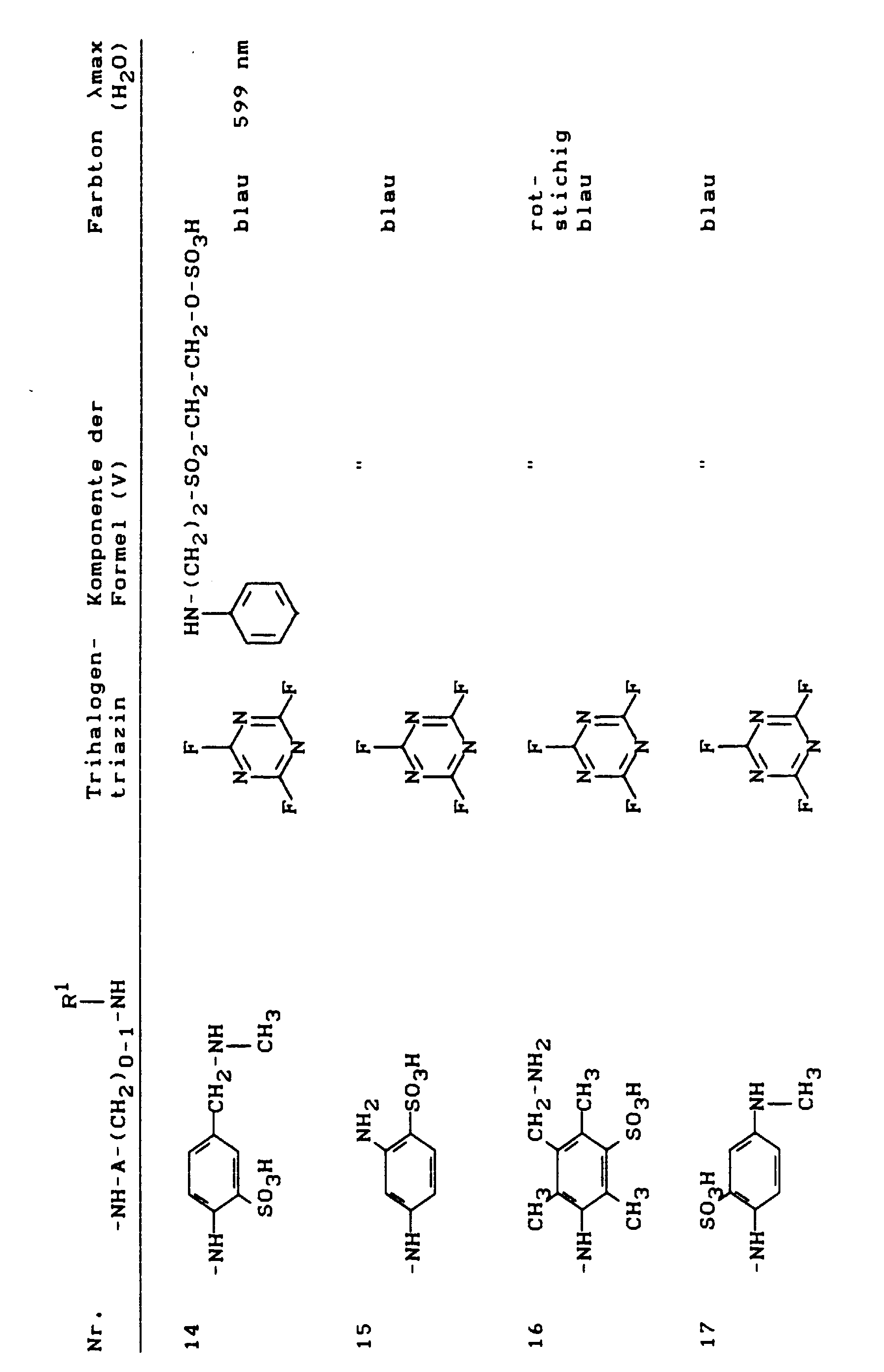

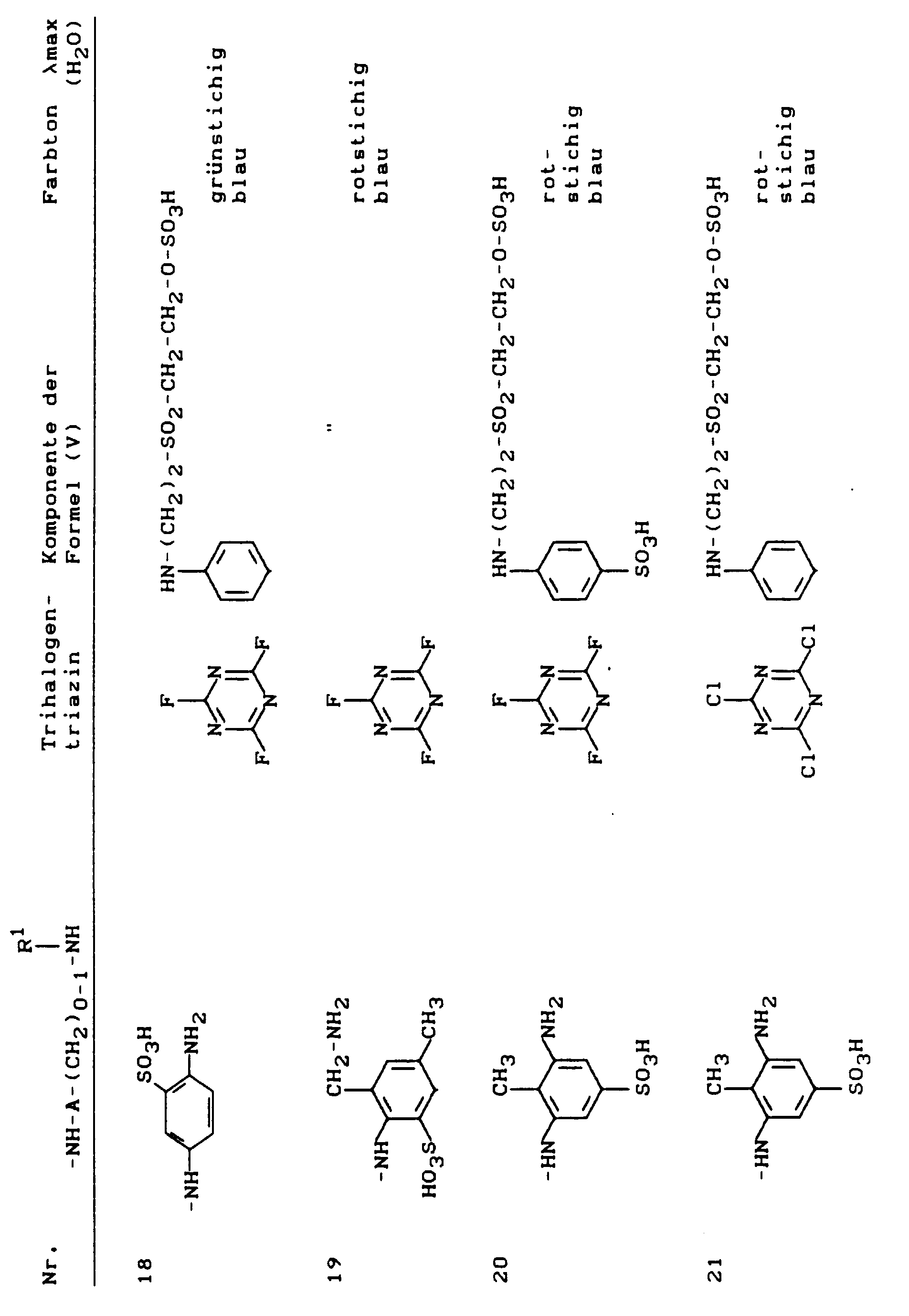

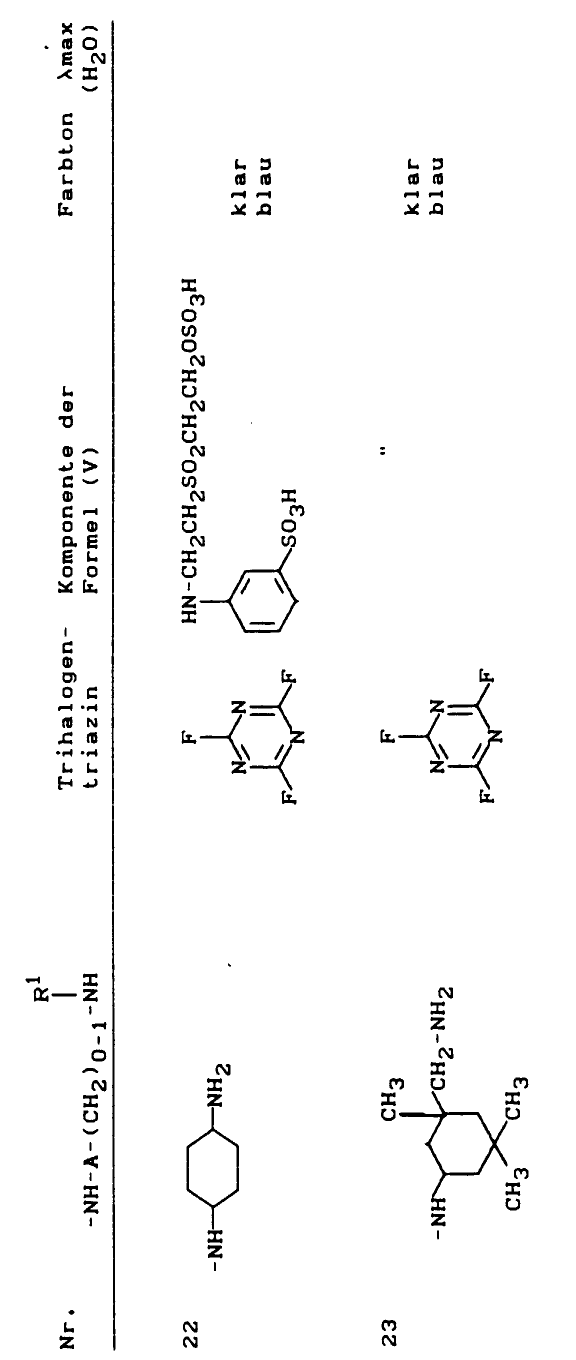

### Beispiel 24

Eine neutralisierte Lösung von 10 g Komponente der Formel 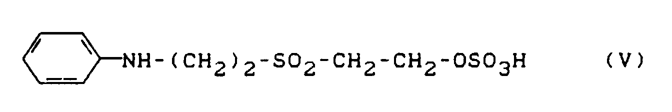 und 1,6 g Natriumfluorid in 60 ml Wasser wird auf 0 bis 2°C abgekühlt. Man läßt 5,5 g Cyanurfluorid zulaufen und hält den pH-Wert mit 2 n Sodalösung zwischen 3,5 bis 4,0. Nach Beendigung der Kondensation stellt man den pH-Wert auf 5,0.

32 g Kupferphthalocyaninkomponente der Formel 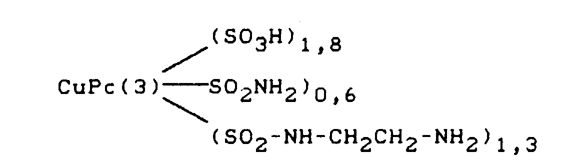 hergestellt nach den Angaben der Europäischen Patentschrift 0 073 267, werden in 300 ml Wasser bei pH = 7,0 bis 7,5 gelöst. Man läßt nun die Lösung des obigen Kondensationsproduktes zu der Farbstoffkomponente bei 0 bis 5°C zulaufen und hält den pH-Wert in der Reaktionsmischung auf 7,0 bis 7,5. Nach 3 Stunden läßt man die Temperatur allmählich auf 20°C ansteigen und hält weiterhin den pH-Wert konstant. Nach beendeter Umsetzung wird das erhaltene Produkt aus der Lösung ausgesalzen, abgesaugt, mit etwas Phosphatlösung bei pH 6,0 gepuffert und im Vakuum bei 45°C getrocknet. Der Farbstoff entspricht der Formel 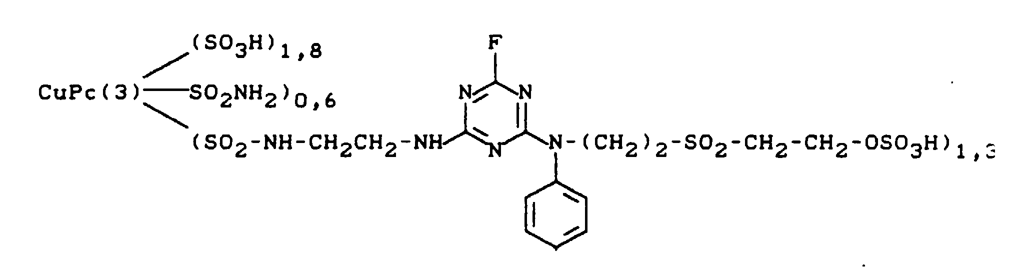 und färbt und druckt Baumwolle nach den für Reaktivfarbstoffe bekannten Verfahren echt und ergiebig in türkisblauen Tönen (λₘₐₓ (H₂O): 620 nm und 665 nm).

Weitere Phthalocyanin-Reaktivfarbstoffe werden erhalten, wenn man die in nachfolgender Zusammenstellung angegebenen Phthalocyaninkomponenten, Trihalogentriazine und Komponenten der Formel (V) nach der in Beispiel 20 beschriebenen Methode miteinander kondensiert.

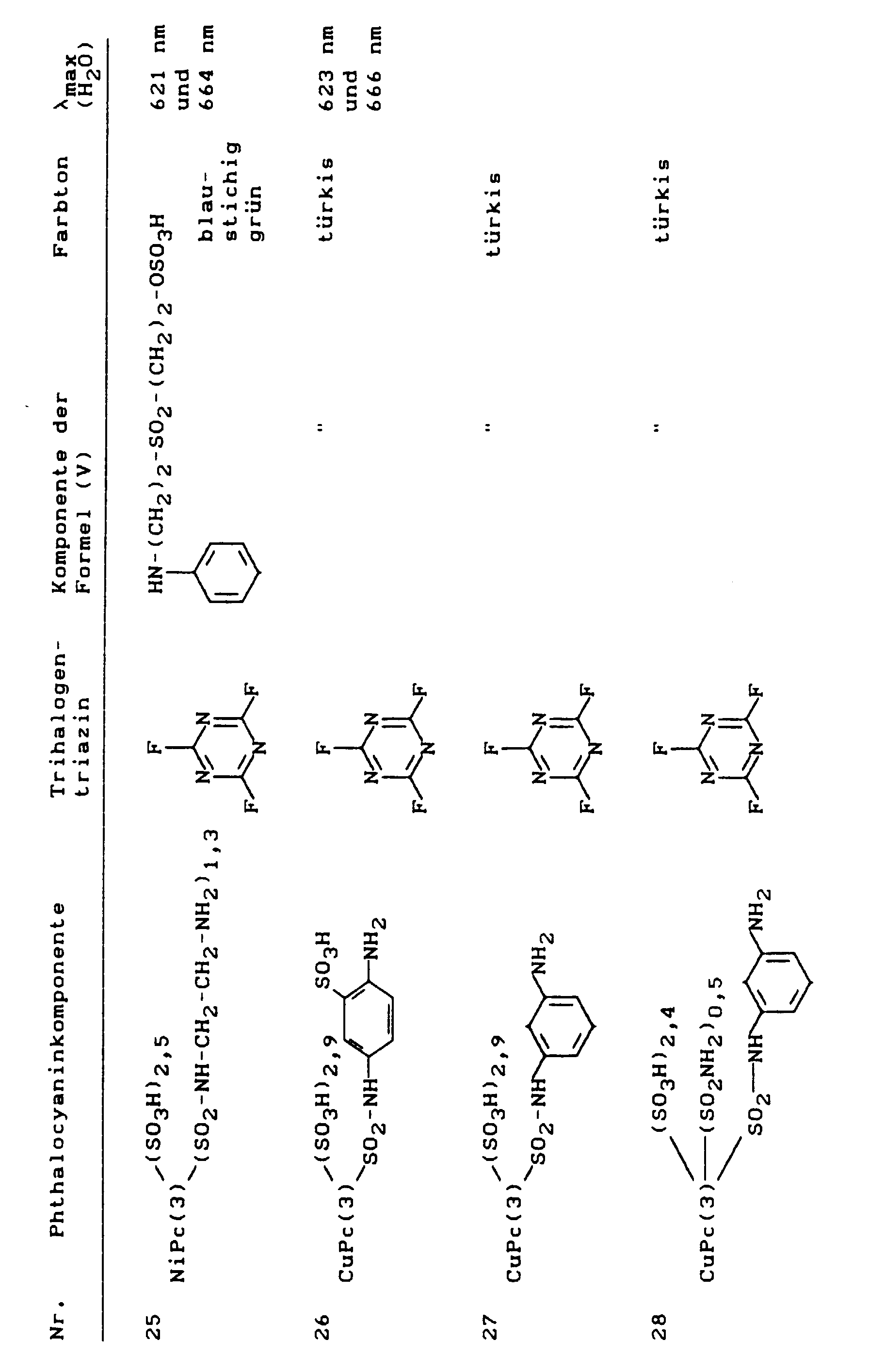

### Beispiel 29

Gemäß Beispiel 1A werden 14 g N-Phenyl-N-β(β-sulfatoethylsulfonyl)-ethylamin in 80 ml Wasser und 2,1 g Natriumfluorid mit 7,5 g Cyanurfluorid kondensiert.

22,1 g Triphendioxazinverbindung der Formel 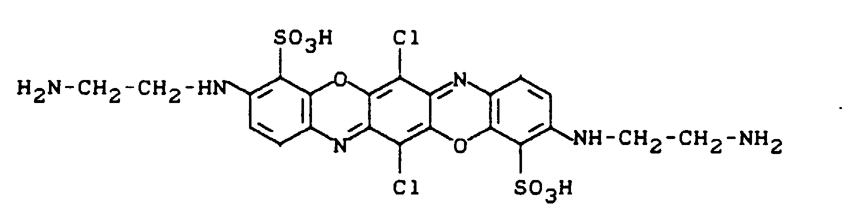 werden in 300 ml Wasser durch Zugabe von Natronlauge bei pH 11,5 bis 12 gelöst.

Man läßt nun diese Lösung und die der oben hergestellten Reaktivkomponenten gleichzeitig in 80 ml vorgelegtes Eis-Wasser eintropfen und hält in dem Reaktionsgemisch die pH-Wert mit 2n Natronlauge auf 8 bis 8,5, die Temperatur weiter auf 0 bis 2°C. Nach mehreren Stunden ist die Umsetzung beendet. Man läßt die Temperatur über Nacht auf 20°C ansteigen. Der Farbstoff wird ausgesalzen, abgesaugt und nach Pufferung auf pH 6,7 bei 45°C im Vakuum getrocknet. Er entspricht der Formel

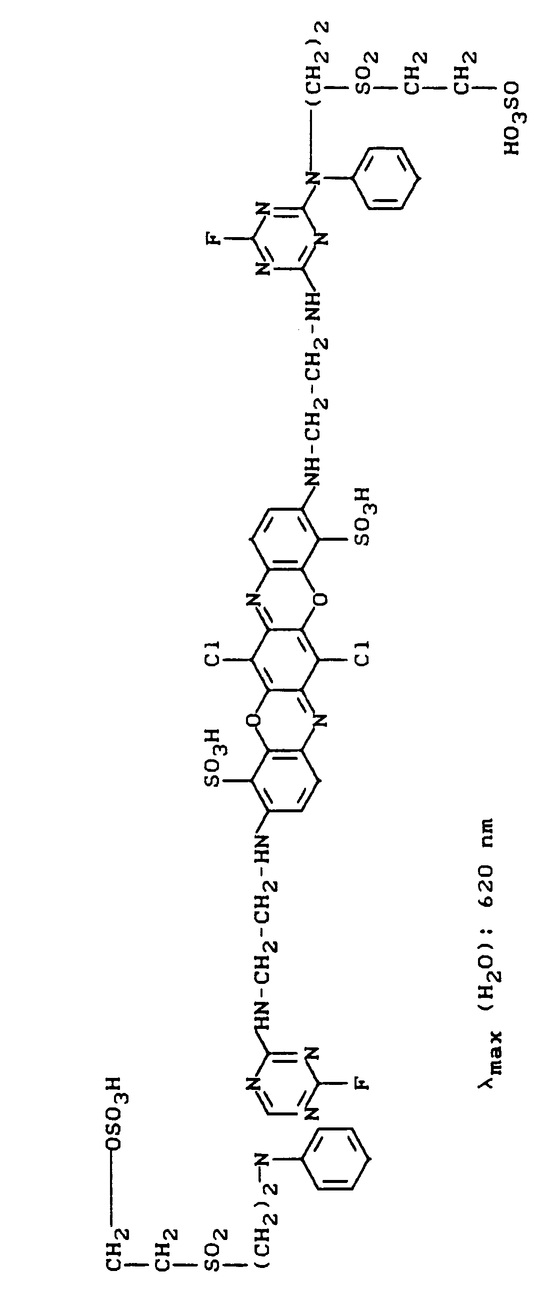

und färbt Baumwolle nach den üblichen Methoden mit guten Fixierausbeuten in kräftigen Blautönen.

### Beispiel 30

50 g Triphendioxazinverbindung der Formel 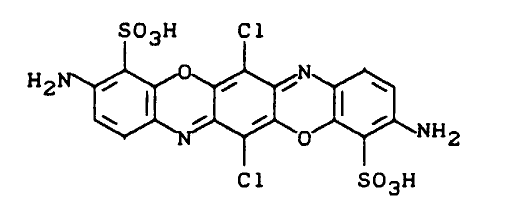 werden in 2.000 ml Wasser mit 10%iger Lithiumhydroxid durch Einstellen des pH-Wertes auf 7,0 gelöst.

Man kühlt auf 0 bis 5°C ab und tropft eine Lösung der in Beispiel 1A hergestellten Reaktivkomponente (250 ml). Nach dem Aufwärmen auf 20°C wird bei pH 7,0 bis 8,0 ca. 2 bis 3 Stunden kondensiert, ausgesalzen, isoliert und getrocknet.

Der erhaltene Farbstoff der Formel 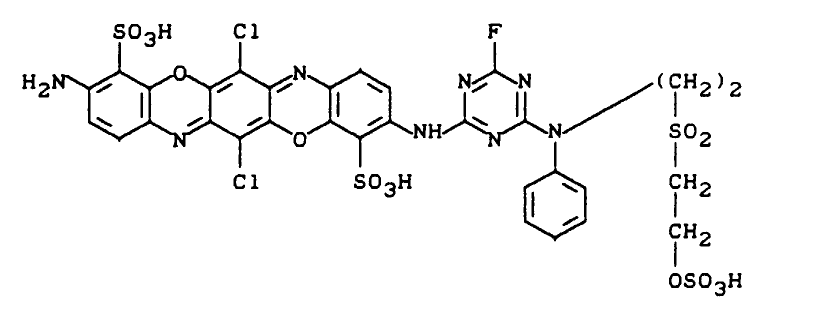 färbt Baumwolle aus langer Flotte in stark rotstichig blauen Tönen (λₘₐₓ (H₂O): 580 nm).

Weitere Triphendioxazin-Reaktivfarbstoffe werden in analoger Verfahrensweise zu den Beispielen 25 und 26 durch Kondensation folgender Komponenten hergestellt:

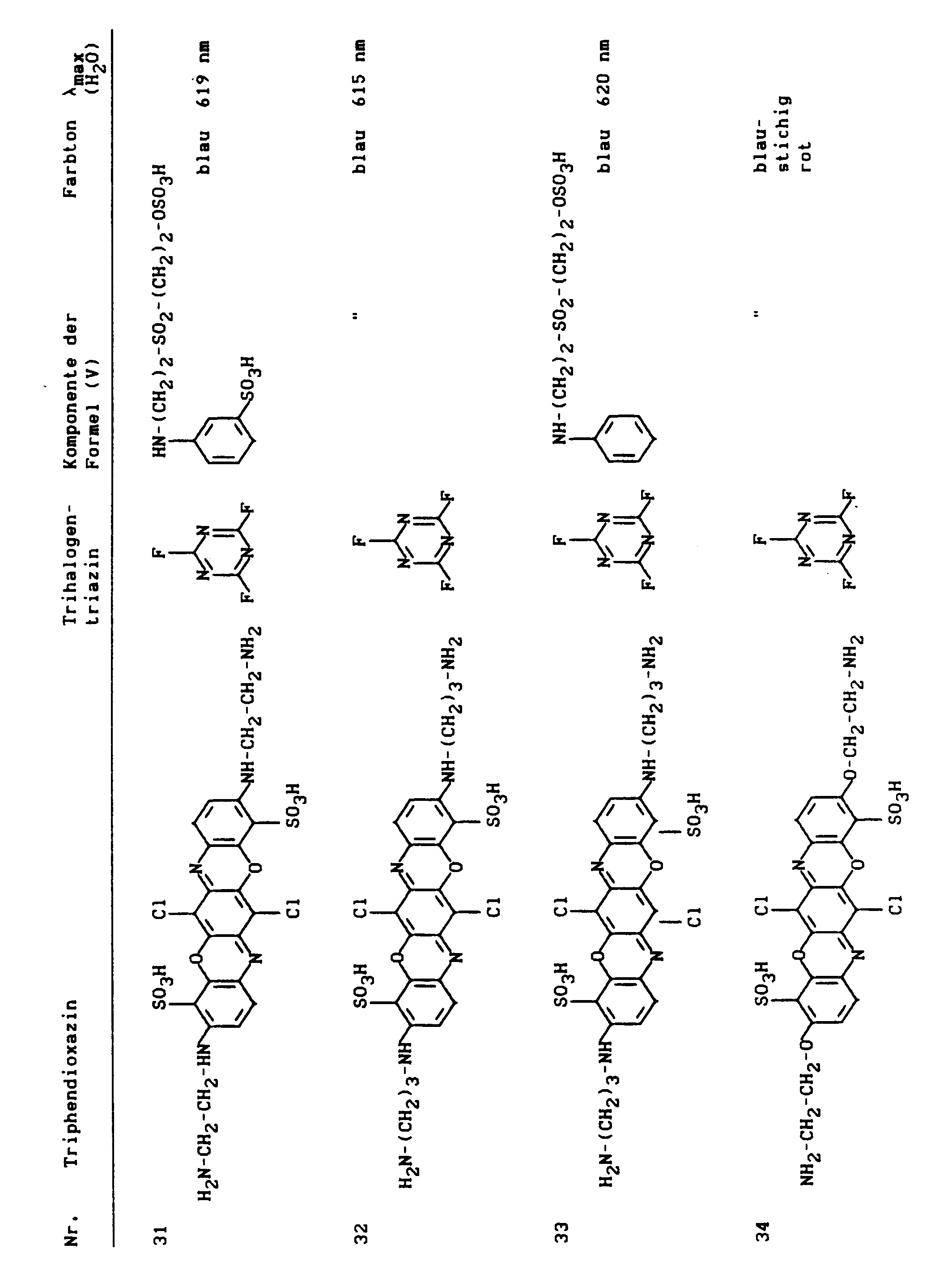

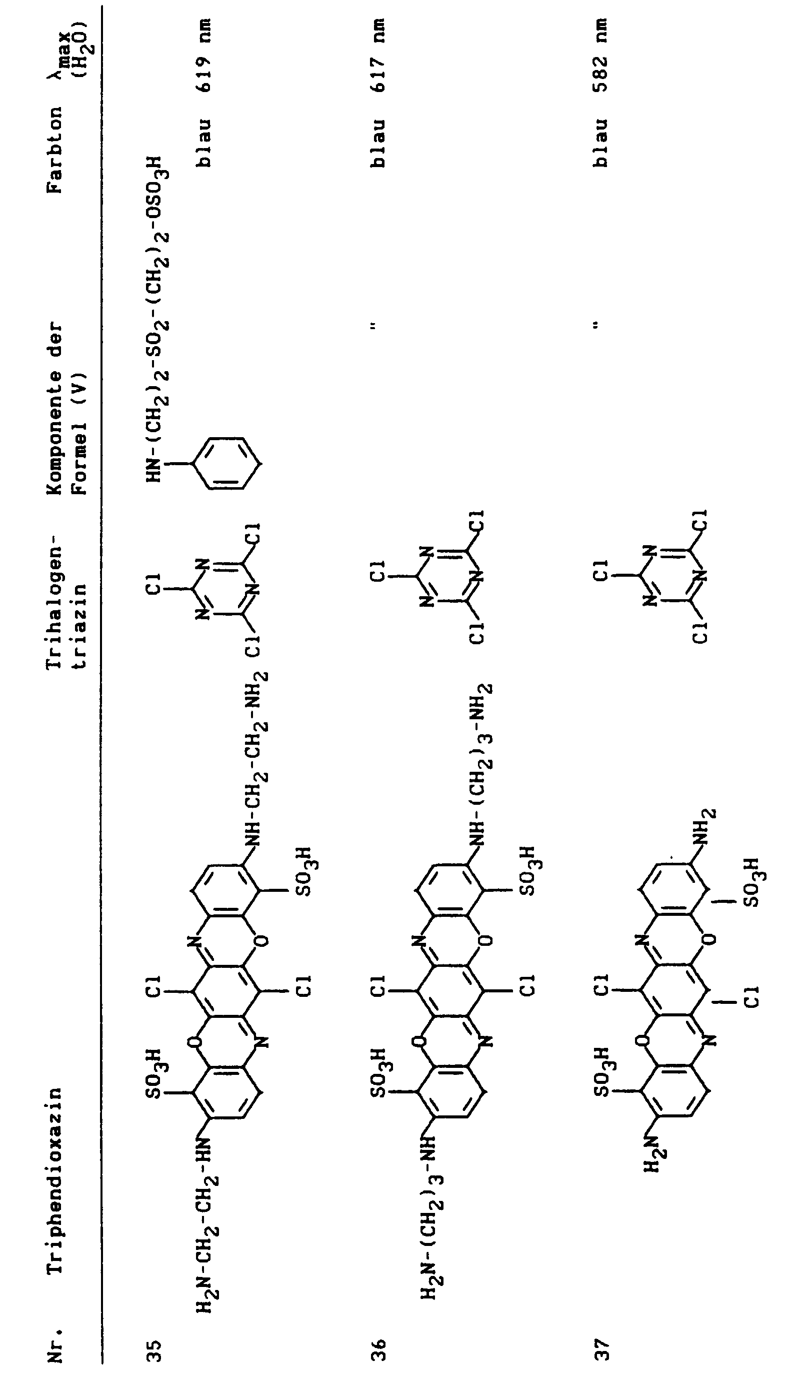

### Beispiel 38

3 Mol 2-Phenylaminoethanol der Formel 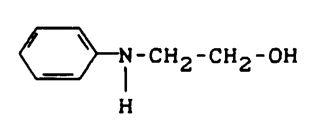 wurden innerhalb von 1 Stunde bei 20 bis 30°C in 1.400 Teile Schwefelsäure (100 %ig) eingetropft. Es wurde 2 Stunden nachgerührt. Die so erhaltene Schmelze trug man bei 0°C auf Eis aus und rührte 1 Stunde bei 0 bis 5°C nach. Das ausgefallene Produkt wurde isoliert. Man erhielt ca. 1.500 Teile des Esters als hellbeige Paste, der folgende Formel zukommt: 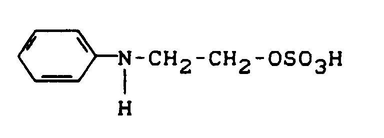 Die gesamte Paste wurde in 2.500 Teile Wasser suspendiert und mit 50 %iger Kaliumhydroxidlösung auf pH 7 gestellt. Bei 60°C tropfte man in 20 Minuten 3 Mol Mercaptoethanol und anschließend 3 Mol Kaliumhydroxid (50 %ige Lösung) zu. Man kochte 8 Stunden am Rückfluß. Das entstandene Öl wurde abgetrennt. Die wäßrige Phase wurde mit Ether ausgeschüttelt. Nach Abdestillieren des Ethers wurde das Produkt vereinigt. Man erhielt 460 Teile der Thioverbindung als Öl mit der Formel 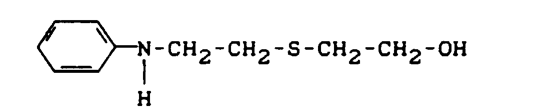 ¹H-NMR(D₆-DMSO)

| | |
|---|---|
| δ = 2,58 - 2,75 | ppm (6H, m) |
| δ = 3,22 | ppm (2H, t) |
| δ = 4,80 | ppm (1H, s) |
| δ = 6,50 - 6,61 | ppm (3H, m) |
| δ = 7,05 | ppm (2H, d) |

### Beispiel 39

460 Teile des Thioethers wurden in 1.000 Teilen Aceton und 1.000 Teilen Wasser aufgenommen. Man tropfte in 1 Stunde 2,6 Mol Essigsäureanhydrid zu. Die Temperatur stieg auf ca. 45°C an. Es wurde 2 Stunden nachgerührt und 14 g Natriumwolframat zugesetzt. Dann tropfte man in 1 Stunde 4,9 Mol 35 Xiges H₂O₂ zu. Die Temperatur stieg auf 50 bis 55°C an. Das Aceton wurde abdestilliert und die verbleibende Lösung auf 10°C abgekühlt. Das entstandene Produkt fiel aus und wurde isoliert. Man erhielt 1.020 Teile einer Paste, der folgende Formel zukommt: 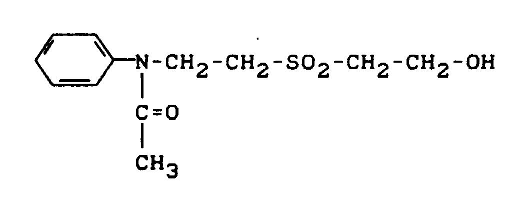 ¹H-NMR (D₆-DMSO)

| | |
|---|---|
| δ = 1,77 | ppm (1H, s) |
| δ = 3,21 - 3,38 | ppm (4H, m) |
| δ = 3,76 | ppm (2H, q) |
| δ = 4,05 | ppm (2H, t) |
| δ = 5,10 | ppm (1H, t) |
| δ = 7,38 - 7,55 | ppm (5H, m) |

### Beispiel 40

1.020 Teile der Paste wurden in 1.500 Teilen Wasser suspendiert und mit 300 Teilen 30 %iger Salzsäurelösung versetzt. Man kochte 3 Stunden am Rückfluß. Die Lösung wurde auf 10°C abgekühlt und mit Natronlauge auf pH 9 gestellt. Das erhaltene Öl wurde abgeschieden. Die wäßrige Phase wurde mit Essigsäureethylester ausgeschüttelt. Nach Abdestillieren des Essigsäureethylesters wurden die Fraktionen des entstandenen Öls der Formel 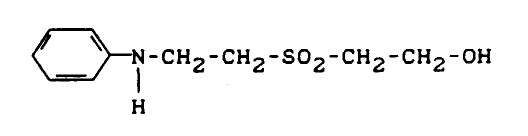 vereinigt und getrocknet. Man erhielt 450 Teile des Sulfons als Öl. ¹H-NMR (D₆-DMSO)

| | |
|---|---|
| δ = 3,23 - 3,55 | ppm (6H, m) |
| δ = 3,85 | ppm (2H, t) |
| δ = 5,30 | ppm (1H, s) |
| δ = 5,78 | ppm (1H, t) |
| δ = 6,60 | ppm (3H, d) |
| δ = 7,10 | ppm (2H, t) |

### Beispiel 41

450 Teile der obigen Substanz wurden innerhalb von 1 Stunde bei 20 bis 30°C in 1.800 Teile Schwefelsäure eingetropft. Nach 8 Stunden trug man die Schmelze auf Eis aus und rührte ca. 1 Stunde bei 0 bis 5°C nach. Das hellbeige, kristalline Produkt wurde isoliert. Man erhielt 910 Teile Paste. Die entstandene Verbindung besitzt folgende Formel:

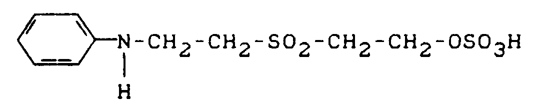

Die Ausbeute beträgt 45 bis 50 %.
¹H-NMR (D₆-DMSO)

| | |
|---|---|
| δ = 3,43 | ppm (2H, t) |
| δ = 3,50 | ppm (2H, t) |
| δ = 3,60 | ppm (2H, t) |
| δ = 4,11 | ppm (2H, t) |
| δ = 7,00 | ppm (3H, d) |
| δ = 7,30 | ppm (2H, t) |
| δ = 8,98 | ppm (2H, s) |

## Patentansprüche

1. Reaktivfarbstoffe, die in Form der freien Säure folgender Formel entsprechen 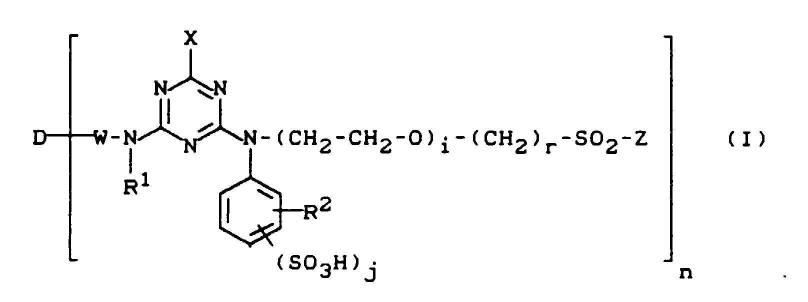 worin
D = Rest eines organischen Farbstoffes aus der Anthrachinon-, Phthalocyanin-, Formazan-, Azomethin-, Dioxazin-, Phenazin-, Stilben-, Triphenylmethan-, Xanthen-, Thioxanthon- oder Nitroarylreihe.
W = eine direkte Bindung oder Brückenglied
R¹ = H, CH₃ oder C₂H₅
R² = H, C₁-C₄-Alkyl, Cl, Br, C₁-C₄-Alkoxy oder COOH
i = 0 oder 1
j = 0, 1 oder 2
r = 2 oder 3
X = F, Cl oder Br
Z = -CH=CH₂, -CH₂-CH₂-OSO₃H, -CH₂-CH₂-S₂O₃H, -CH₂-CH₂-O-CO-CH₃, -CH₂-CH₂-OPO₃H₂, -CH₂-CH₂-OH,
n = 1 oder 2.

2. Reaktivfarbstoffe nach Anspruch 1, dadurch gekennzeichnet, daß der Rest D eine oder mehrere wasserlöslichmachende Gruppen und/oder keine weiteren faserreaktiven Reste enthält.

3. Reaktivfarbstoffe gemäß wenigstens einem der vorhergehenden Ansprüche, die in Form der freien Säure folgender Formel entsprechen 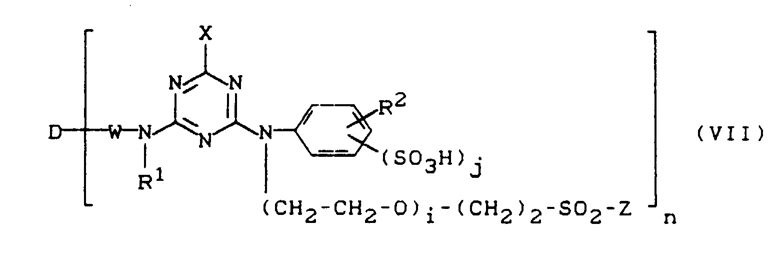 worin
D = Rest eines organischen Farbstoffes aus der Anthrachinon-, Phthalocyanin-, Formazan-, Azomethin-, Dioxazin-, Phenazin-, Stilben-, Triphenylmethan-, Xanthen-, Thioxanthon- oder Nitroarylreihe.
R²= H, CH₃ oder C₂H₅,
R¹ = H oder CH₃, C₂H₅,
W = direkte Bindung oder Brückenglied,
i = 0 oder 1,
j = 0 oder 1,
X = F oder Cl
Z = CH₂-CH₂-OSO₃H, CH=CH₂,
n = 1 oder 2 ist.

4. Reaktivfarbstoffe gemäß wenigstens einem der vorhergehenden Ansprüche der Formel 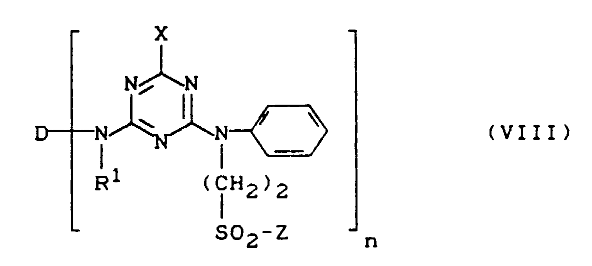 worin
D = Rest eines organischen Farbstoffs aus der Anthrachinon-, Phthalocyanin-, Formazan- oder Dioxazinreihe ist, der keine weiteren faserreaktiven Gruppen enthält.
X = F, Cl,
Z = CH₂-CH₂-OSO₃H,
R¹ = H, CH₃ oder C₂H₅,
n = 1 ist.

5. Reaktivfarbstoffe gemäß wenigstens einem der vorhergehenden Ansprüche, dadurch gekennzeichnet, daß sie einer der folgenden Formeln entsprechen, wobei B einen Rest der Formel 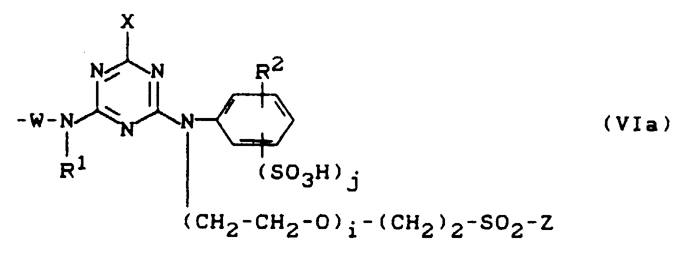 bedeutet, in welchem die Substituenten die in Anspruch 1 angegebene Bedeutung haben, 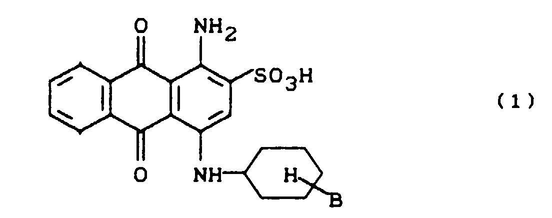 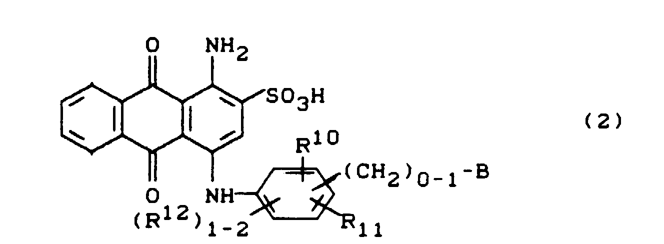 worin
R¹⁰ = H, Methyl, Methoxy, Chlor
R¹¹ = H, SO₃H und
R¹² = H, Methyl oder Ethyl. 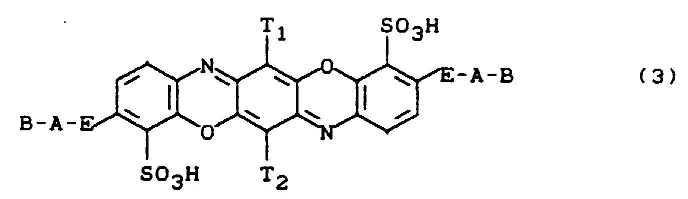 worin
A = für ein gegebenenfalls substituiertes Phenylen oder ein gegebenenfalls substituiertes aromatisch-aliphatisches Brückenglied oder für ein gegebenenfalls durch Heteroatome wie NR¹³, O oder S enthaltende Gruppierungen unterbrochenes, geradkettiges oder verzweigtes C₁-C₆-Alkylen, das mit C₁-C₆-Alkoxy, OSO₃H, SO₃H, COOR oder Halogen substituiert sein kann, steht
und wobei innerhalb eines Brückengliedes A die Gruppe NR¹³ mit der Gruppe NR_{b} auch einen heterocyclischen aliphatischen Ring bilden kann, insbesondere 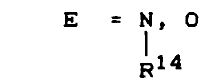 und
T₁, T₂ = H, Cl, Br, C₁-C₂-Alkyl, OCH₃, OC₂H₅, Acylamino, C₁-C₂-Alkoxycarbonyl ist,
R¹³, R¹⁴ = unabhängig voneinander H, C₁-C₄-Alkyl, das durch OR, OSO₃H, SO₃H, COOR oder Halogen substituiert sein kann
R = H, CH₃ oder C₂H₅ 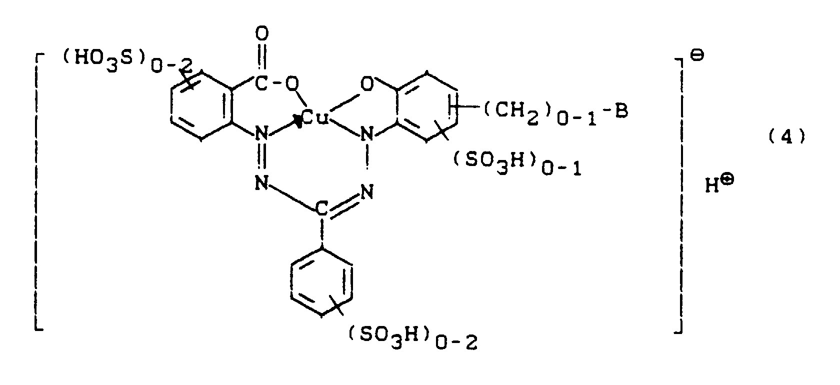 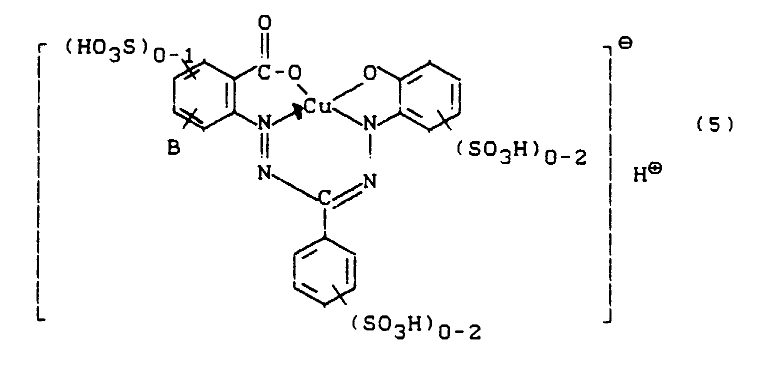 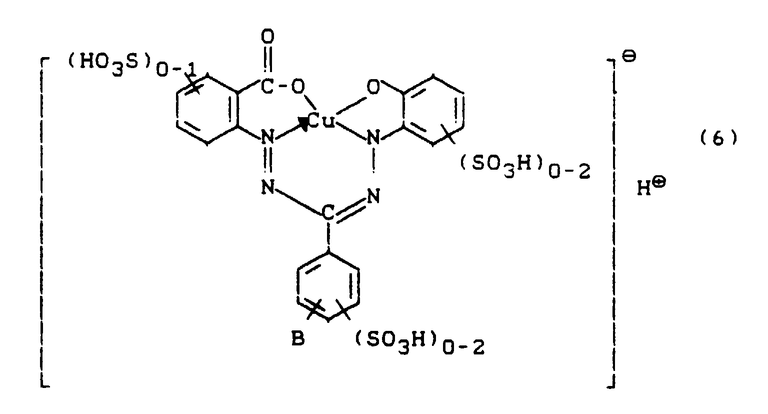 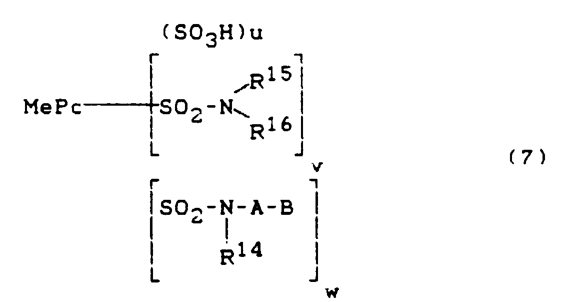
worin
Me = Cu, Ni,
Pc = Rest eines Phthalocyanins
u+v+w = 3,4 - 4,0, mit der Maßgabe, daß
u = 0,8 - 2,0,
v = 0 - 1,0,
w = 1,0 - 3,0 ist und
A die oben angegebene Bedeutung hat,
R¹⁴ die oben angegebene Bedeutung hat,
R¹⁵ und R¹⁶ = H, C₁-C₂-Alkyl, gegebenenfalls substituiert durch OH, OSO₃H, SO₃H oder COOH ist. 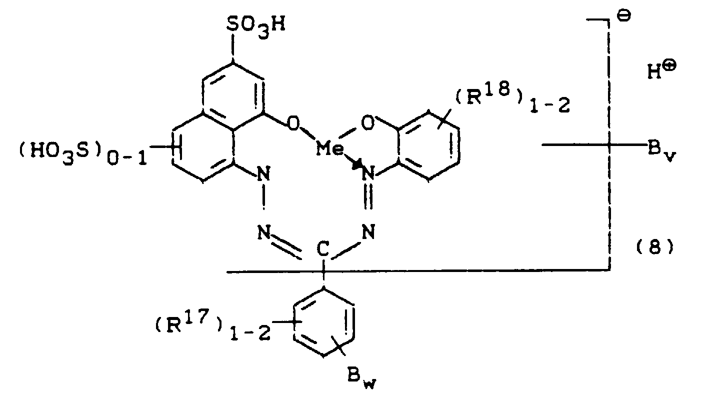
worin
v, w = 0 oder 1, wobei w ungleich v ist,
R¹⁸, R¹⁷ = unabhängig voneinander H, C₁-C₄-Alkyl, C₁-C₄-Alkoxy, OH, Halogen, COOH, NO₂, SO₃H, Sulfonamido, C₁-C₄-Alkylcarbonylamino, gegebenenfalls substituiertes Phenylcarbonylamino, C₁-C₄-Alkylsulfonylamino, gegebenenfalls substituiertes Phenylsulfonylamino.

6. Reaktivfarbstoffe gemäß Anspruch 5
worin
X = F,
i = 0,
j = 0 oder 1,
Z = CH₂-CH₂-OSO₃H, CH=CH₂
R² = H

7. Reaktivfarbstoffe gemäß Anspruch 5
worin
X = F
i = O
j = O
Z = CH₂-CH₂-OSO₃H
R² = H

8. Verfahren zur Herstellung der Reaktivfarbstoffe gemäß wenigstens einem oder mehreren der vorhergehenden Ansprüche entweder
a) durch Kondensation von Farbstoffen der Formel 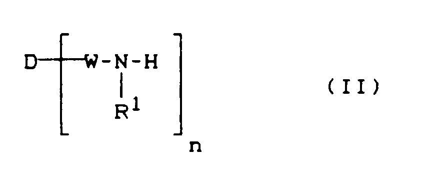 worin
D, W, R¹ und n die in Anspruch 1 angegebene Bedeutung haben, mit n-Molen Trihalogentriazin der Formel 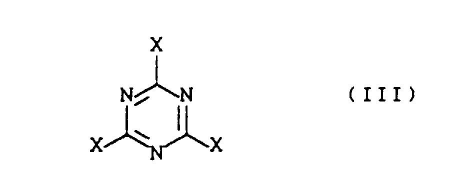 worin
X = F, Cl, Br
zu Verbindungen der Formel 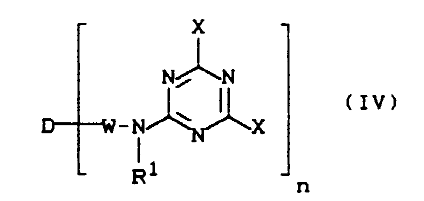 und weitere Kondensation der Verbindungen der Formel (IV) mit n-Molen der Komponenten der Formel 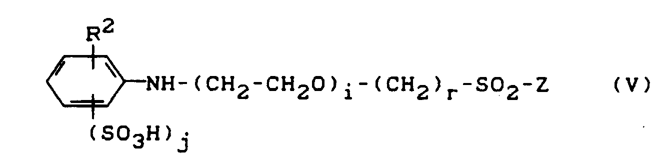 worin
r, i, j, R² und Z die in Anspruch 1 angegebene Bedeutung haben, oder
b) in umgekehrter Reihenfolge durch Kondensation von Trihalogentriazinen der Formel (III) mit den Komponenten der Formel (V) zu den Primärkondensationsprodukten 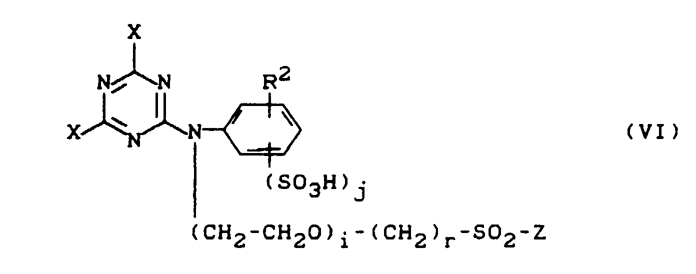 worin
X = F, Cl, Br und
r, i, j, R₂ und Z die in Anspruch 1 angegebene Bedeutung haben,
und weitere Kondensation von nMolen der Verbindungen der Formel (VI) mit den Farbstoffen der Formel (II), oder
c) durch Kondensation geeigneter Vorprodukte mit den Trihalogentriazinen (III) und den Komponenten der Formel (V) beziehungsweise durch Kondensation geeigneter Vorprodukte mit den Primärkondensationsprodukten der Formel (VI) und anschließender Farbstoffsynthese.

9. Verfahren zum Färben oder Bedrucken cellulosehaltiger oder polyamidgruppenhaltiger Materialien mit einem Reaktivfarbstoff, dadurch gekennzeichnet, daß ein Reaktivfarbstoff gemäß wenigstens einem der vorhergehenden Ansprüche verwendet wird.

10. Verbindungen der allgemeinen Formel 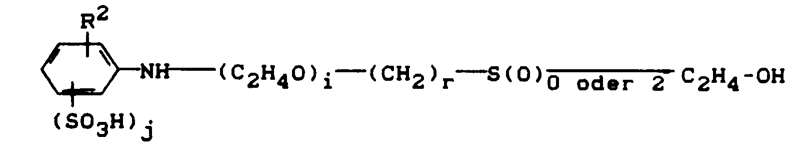 oder 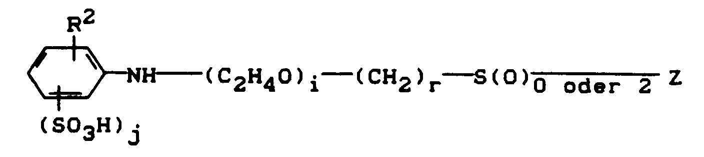 einschließlich ihrer Salze und ihrer Umsetzungsprodukte mit Schutzgruppen
worin R², Z, j, i und r die in Anspruch 1 angegebene Bedeutung haben,
mit Ausnahme der Verbindung der Formel

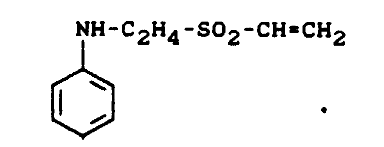

11. Verfahren zur Herstellung von Verbindungen gemäß Anspruch 10 durch Sulfatieren von Verbindungen der Formel 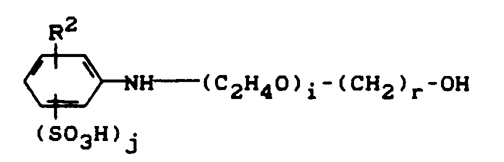 anschließende Umsetzung mit Mercaptoethanol unter Erhalt von 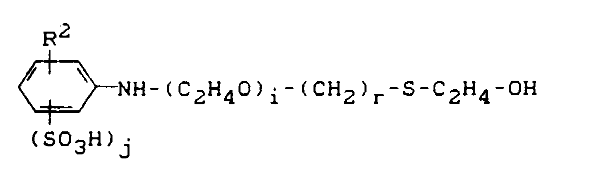 gegebenenfalls Blockierung der NH-Gruppe mit einer Schutzgruppe und Oxidation zu 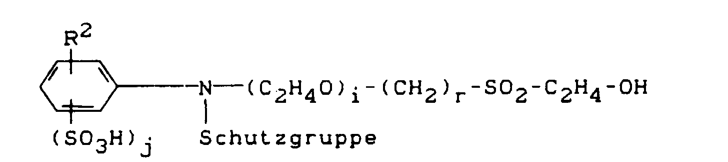 gegebenenfalls Abspalten der Schutzgruppe unter Erhalt von 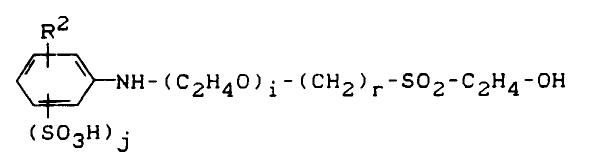 und gegebenenfalls übliche Überführung des Restes SO₂C₂H₄-OH in die Vinylsulfonylgruppe oder Überführung der -CH₂-CH₂-OH Gruppe in die übrigen unter Z in Anspruch 1 aufgeführten abspaltbaren Gruppen.

## Claims

1. Reactive dyestuffs which, in the form of the free acid, have the following formula 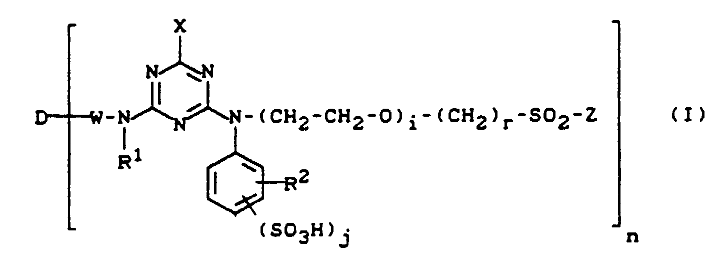 in which
D is the radical of an organic dyestuff from the anthraquinone, phthalocyanine, formazan, azomethine, dioxazine, phenazine, stilbene, triphenylmethane, xanthene, thioxanthone or nitroaryl series.
W is a direct bond or a bridging member
R¹ is H, CH₃ or C₂H₅
R² is H, C₁-C₄-alkyl, Cl, Br, C₁-C₄-alkoxy or COOH
i is 0 or 1
j is 0, 1 or 2
r is 2 or 3
X is F, Cl or Br
Z is -CH=CH₂, -CH₂-CH₂-OSO₃H, -CH₂-CH₂-S₂O₃H, -CH₂-CH₂-O-CO-CH₃, -CH₂-CH₂-OPO₃H₂, -CH₂-CH₂-OH,
n is 1 or 2.

2. Reactive dyestuffs according to Claim 1, characterised in that the radical D contains one or more water-solubilising groups and/or no further fibre-reactive radicals.

3. Reactive dyestuffs according to at least one of the preceding claims, which, in the form of the free acid, have the following formula 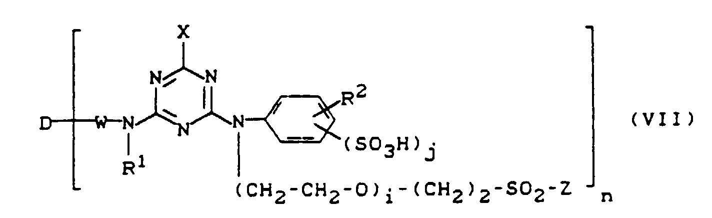 in which
D is the radical of an organic dyestuff from the anthraquinone, phthalocyanine, formazan, azomethine, dioxazine, phenazine, stilbene, triphenylmethane, xanthene, thioxanthone or nitroaryl series.
R² is H, CH₃ or C₂H₅,
R¹ is H or CH₃, C₂H₅,
W is a direct bond or a bridging member,
i is 0 or 1,
j is 0 or 1,
X is F or Cl
Z is CH₂-CH₂-OSO₃H, CH=CH₂,
n is 1 or 2.

4. Reactive dyestuffs according to at least one of the preceding claims of the formula 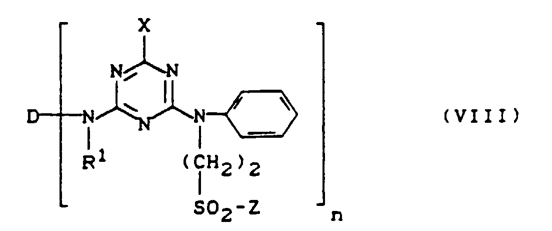 in which
D is the radical of an organic dyestuff from the anthraquinone, phthalocyanine, formazan or dioxazine series, which dyestuff contains no further fibre-reactive groups.
X is F, Cl,
Z is CH₂-CH₂-OSO₃H,
R¹ is H, CH₃ or C₂H₅,
n is 1.

5. Reactive dyestuffs according to at least one of the preceding claims, characterised in that they have one of the following formulae, where B is a radical of the formula 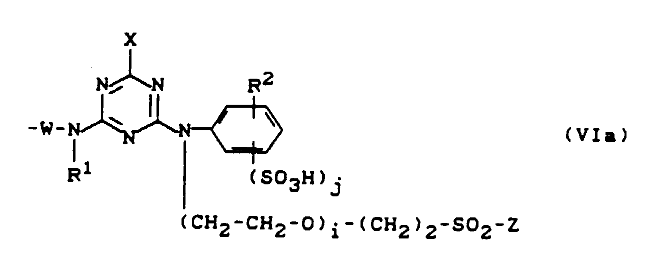 in which the substituents have the meaning given in Claim 1, 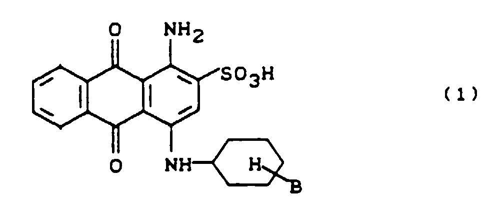 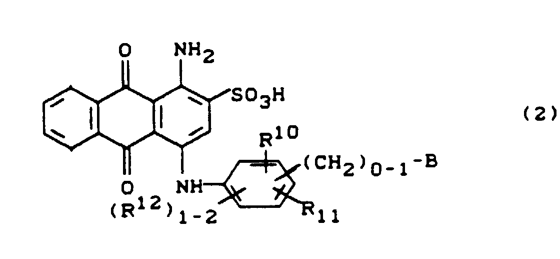 in which
R¹⁰ is H, methyl, methoxy, chlorine
R¹¹ is H, SO₃H and
R¹² is H, methyl or ethyl. 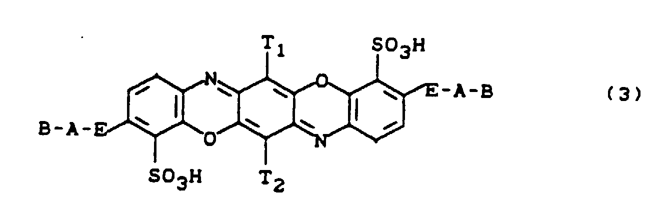 in which
A represents a substituted or unsubstituted phenylene or a substituted or unsubstituted aromatic-aliphatic bridging member or straight-chain or branched C₁-C₆-alkylene which may be interrupted by groupings containing hetero atoms such as NR¹³, O or S and substituted by C₁-C₆-alkoxy, OSO₃H, SO₃H, COOR or halogen,
it also being possible for the group NR¹³ within a bridging member A to form a heterocyclic aliphatic ring with the group NR_{b}, in particular
E is 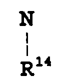 or O and
T₁, T₂ are H, Cl, Br, C₁-C₂-alkyl, OCH₃, OC₂H₅, acylamino, C₁-C₂-alkoxycarbonyl,
R¹³, R¹⁴, independently of one another, are H, C₁-C₄-alkyl, which may be substituted by OR, OSO₃H, SO₃H, COOR or halogen,
R is H, CH₃ or C₂H₅ 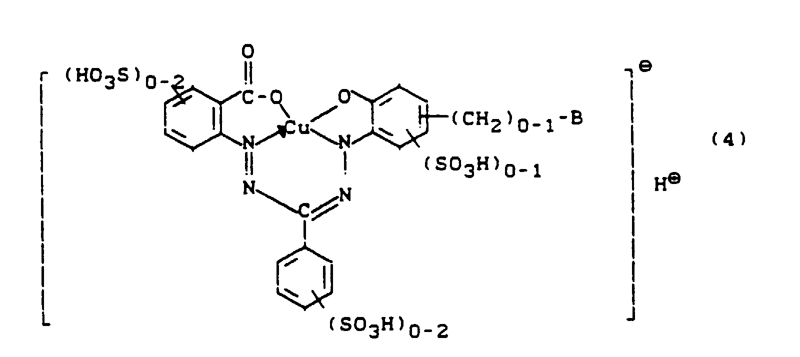 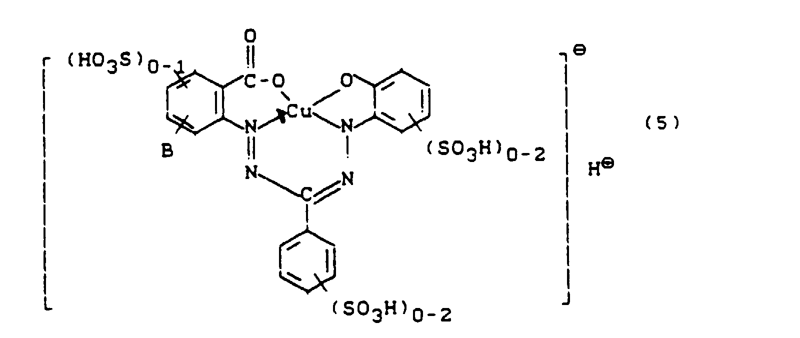 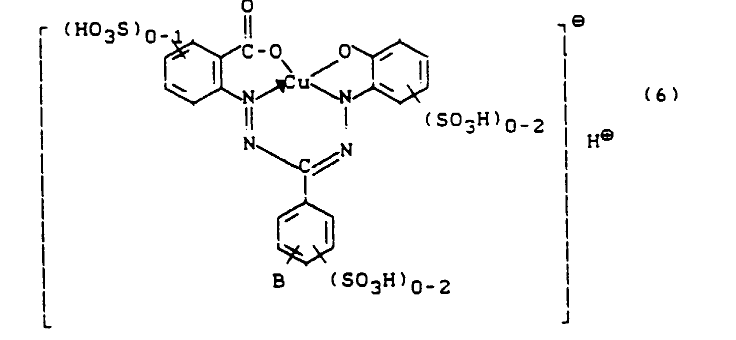 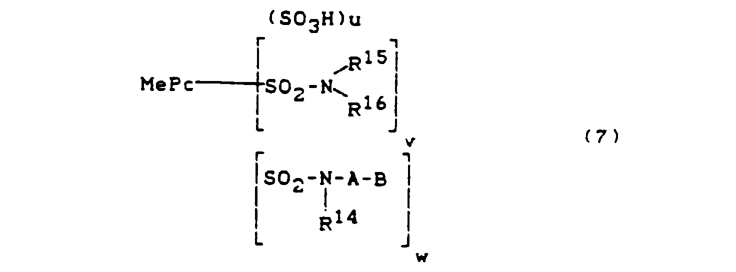
in which
Me is Cu, Ni
Pc is the radical of a phthalocyanine
u+v+w is 3.4 - 4.0, with the proviso that
u is 0.8 - 2.0,
v is 0 - 1.0,
w is 1.0 - 3.0 and
A has the abovementioned meaning,
R¹⁴ has the abovementioned meaning,
R¹⁵ and R¹⁶ are H, C₁-C₂-alkyl which is unsubstituted or substituted by OH, OSO₃H, SO₃H or COOH.
in which 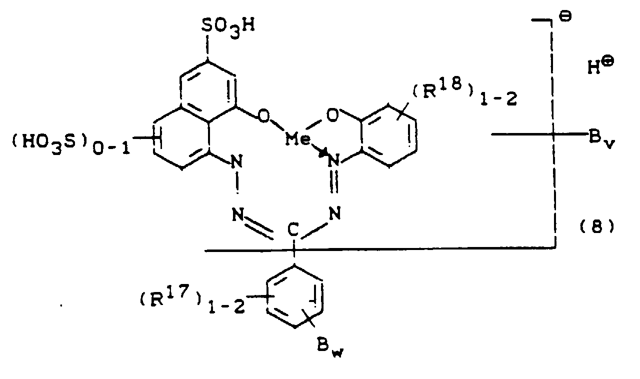
v, w are 0 or 1, w not being equal to v,
R¹⁸, R¹⁷, independently of one another, are H, C₁-C₄-alkyl, C₁-C₄-alkoxy, OH, halogen, COOH, NO₂, SO₃H, sulphonamido, C₁-C₄-alkylcarbonylamino, substituted or unsubstituted phenylcarbonylamino, C₁-C₄-alkylsulphonylamino, substituted or unsubstituted phenylsulphonylamino.

6. Reactive dyestuffs according to Claim 5,
in which
X is F,
i is 0,
j is 0 or 1,
Z is CH₂-CH₂-OSO₃H, CH=CH₂
R² is H.

7. Reactive dyestuffs according to Claim 5,
in which
X is F
i is 0
j is 0
Z is CH₂-CH₂-OSO₃H
R² is H.

8. Process for the preparation of the reactive dyestuffs according to at least one or more of the preceding claims either
a) by condensation of dyestuffs of the formula 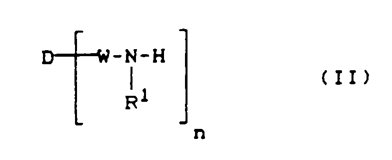 in which
D, W, R¹ and n have the meaning given in Claim 1, with n moles of trihalogenotriazines of the formula 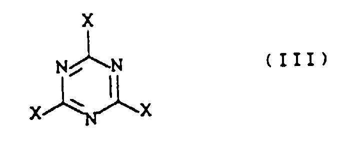 in which
X is F, Cl, Br
to give compounds of the formula 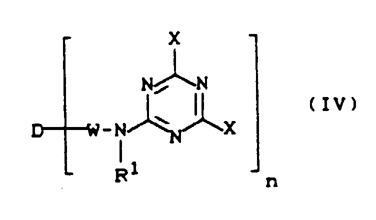 and further condensation of the compounds of the formula (IV) with n moles of the components of the formula 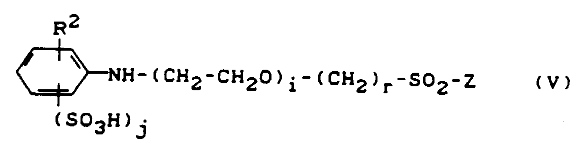 in which
r, i, j, R² and Z have the meaning given in Claim 1, or
b) in reverse order by condensation of trihalogenotriazines of the formula (III) with the components of the formula (V) to give the primary condensation products 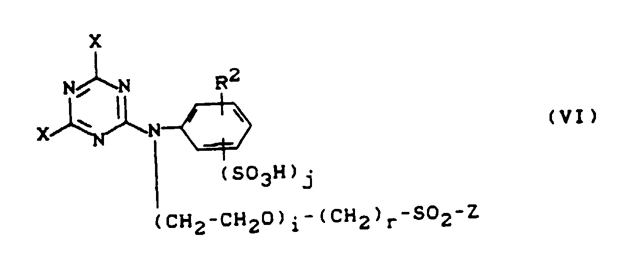 in which
X is F, Cl, Br and
r, i, j, R₂ and Z have the meaning given in Claim 1,
and further condensation of n moles of the compounds of the formula (VI) with the dye-stuffs of the formula (II),
or
c) by condensation of suitable precursors with the trihalogenotriazines (III) and the components of the formula (V) or by condensation of suitable precursors with the primary condensation products of the formula (VI), followed by dyestuff synthesis.

9. Process for the dyeing or printing of cellulosic or polyamide-containing materials with a reactive dyestuff, characterised in that a reactive dyestuff according to at least one of the preceding claims is used.

10. Compounds of the general formula 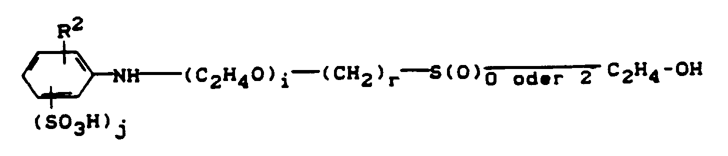 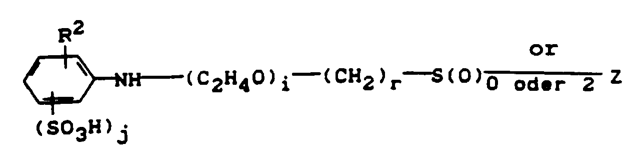 including their salts and their reaction products containing protective groups,
in which R², z, j, i and r have the meaning given in Claim 1,
with the exception of the compound of the formula

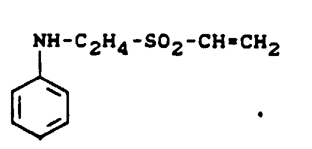

11. Process for the preparation of the compounds according to Claim 10 by sulphation of compounds of the formula 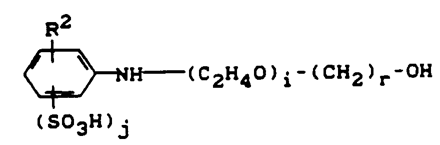 followed by reaction with mercaptoethanol to give 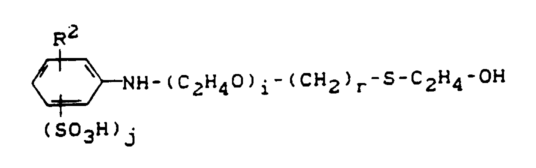 and, if desired, blocking of the NH group with a protective group and oxidation to give 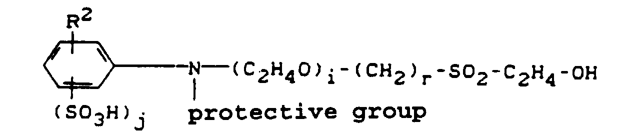 and, if desired, elimination of the protective group to give 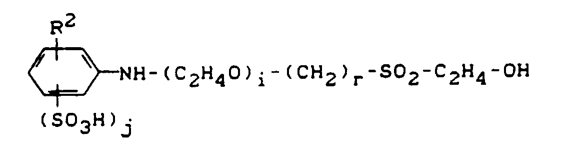 and, if desired, customary conversion of the radical SO₂C₂H₄-OH into the vinylsulphonyl group or conversion of the -CH₂-CH₂-OH group into the remaining detachable groups listed in Claim 1 under Z.

## Revendications

1. Colorants réactifs qui, à l'état d'acides libres, répondent à la formule 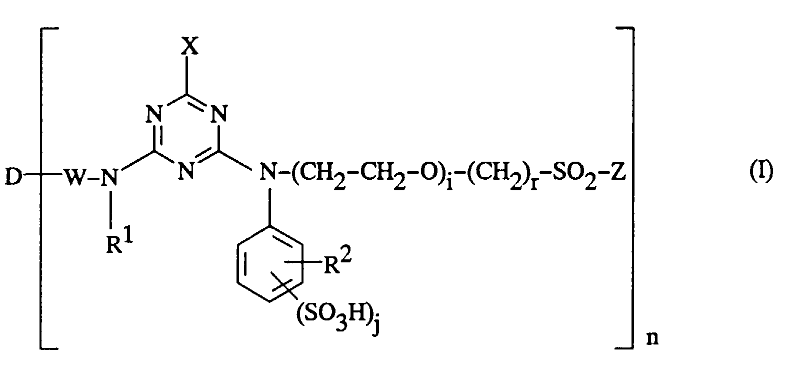 dans laquelle
D représente le radical d'un colorant organique choisi parmi les colorants d'anthraquinone, de phtalocyanine, de formazane, d'azométhine, de dioxazine, de phénazine, du stilbène, du triphénylméthane, du xanthène, de la thioxanthone ou nitroaryliques,
W représente une liaison directe ou un pont,
R¹ représente H, CH₃ ou C₂H₅,
R² représente H, un groupe alkyle en C₁-C₄, Cl, Br, un groupe alcoxy en C₁-C₄ ou COOH
i = 0 ou 1,
j = 0, 1 ou 2,
r = 2 ou 3,
X représente F, Cl ou Br,
Z représente -CH=CH₂, -CH₂-CH₂-OSO₃H, -CH₂-CH₂-S₂O₃H, -CH₂-CH₂-, O-CO-CH₃, -CH₂-CH₂-OPO₃H₂, -CH₂-CH₂-OH, et
n = 1 ou 2.

2. Colorants réactifs selon revendication 1, caractérisés en ce que le radical D contient un ou plusieurs groupes hydrosolubilisants et/ou pas d'autres groupes réactifs avec les fibres.

3. Colorants réactifs selon au moins une des revendications qui précèdent, qui, à l'état d'acides libres, répondent à la formule 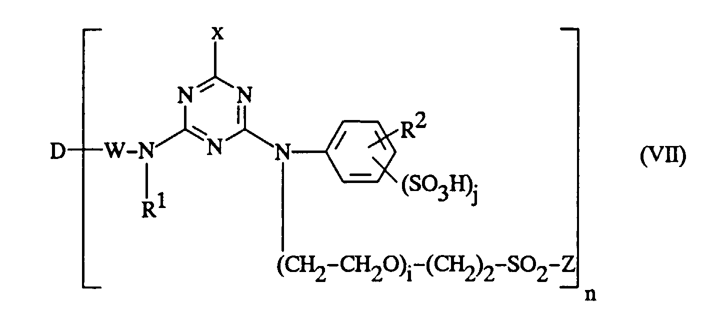 dans laquelle
D représente le radical d'un colorant organique choisi parmi les colorants d'anthraquinone, de phtalocyanine, de formazane, d'azométhine, de dioxazine, de phénazine, du stilbène, du triphénylméthane, du xanthène, de la thioxanthone ou nitroaryliques,
R² représente H, CH₃ ou C₂H₅
R¹ représente H ou CH₃, C₂H₅,
W représente une liaison directe ou pont
i = 0 ou 1
j = 0 ou 1
X représente F ou Cl
Z représente CH₂-CH₂-OSO₃H ou CH=CH₂
n = 1 ou 2.

4. Colorants réactifs selon au moins une des revendications qui précèdent, de formule 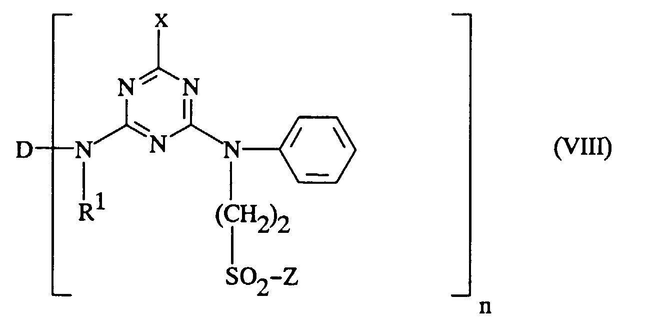 dans laquelle
D représente le radical d'un colorant organique choisi parmi les colorants d'anthraquinone, de phtalocyanine, de formazane ou de dioxazine et qui ne porte pas d'autres groupes réactifs avec les fibres,
X représente F, Cl,
Z représente CH₂-CH₂-OSO₃H,
R¹ représente H, CH₃ ou C₂H₅, et
n = 1.

5. Colorants réactifs selon au moins une des revendications qui précèdent, caractérisés en ce qu'ils répondent à l'une des formules suivantes, dans laquelle B représente un radical de formule 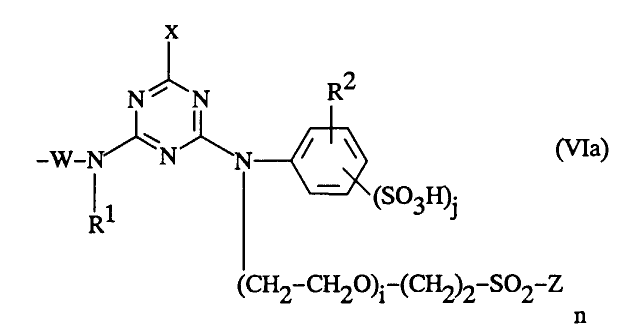 dans lequel les symboles ont les significations indiquées dans la revendication 1, 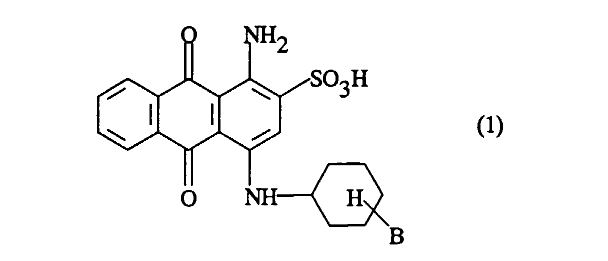 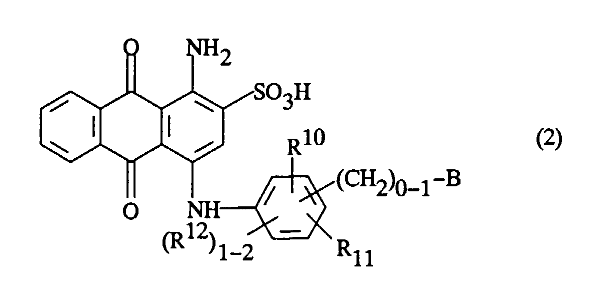 dans lesquelles
R¹⁰ représente H, un groupe méthyle, méthoxy, le chlore
R¹¹ représente H ou SO₃H et
R¹² représente H, un groupe méthyle ou éthyle ; 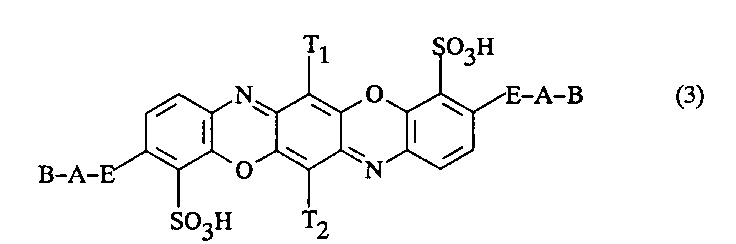 dans laquelle
A représente un groupe phénylène éventuellement substitué ou un pont aromatique-aliphatique éventuellement substitué ou un groupe alkylène en C₁-C₆ à chaîne droite ou ramifiée éventuellement interrompu par des groupements contenant des hétéroatomes tels que NR¹³, O ou S, et qui peut être substitué par des groupes alcoxy en C₁-C₆, OSO₃H, SO₃H, COOR ou des halogènes,
le groupe NR¹³, à l'intérieur d'un pont A, pouvant également former avec le groupe NR_{b} un noyau aliphatique hétérocyclique, et plus spécialement 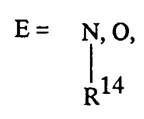 et
T₁ et T₂ représentent H, Cl, Br, des groupes alkyle en C₁-C₂, OCH₃, OC₂H₅, acylamino, (alcoxy en C₁-C₂)-carbonyle,
R¹³ et R¹⁴ représentent chacun, indépendamment l'un de l'autre, H, un groupe alkyle en C₁-C₄ qui peut être substitué par OR, OSO₃H, SO₃H, COOR ou un halogène,
R représente H, CH₃ ou C₂H₅ ; 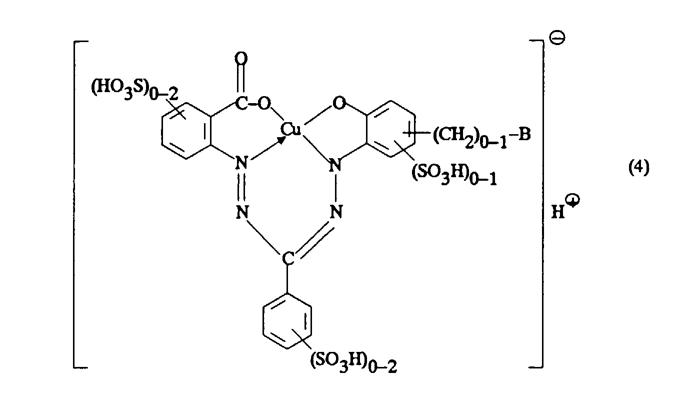 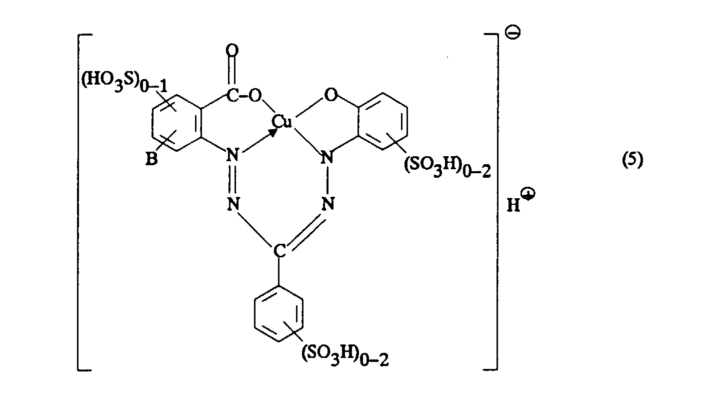 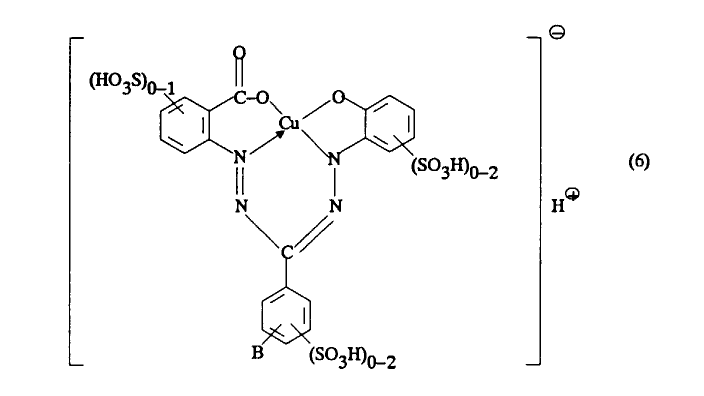 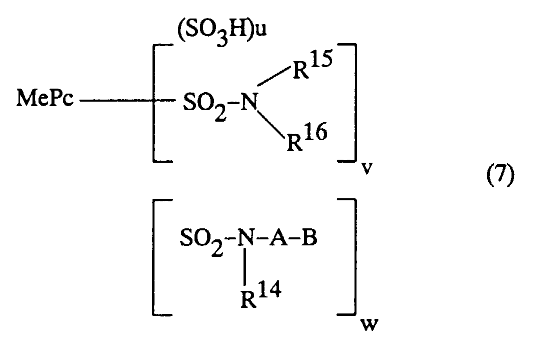 dans lesquelles
Me = Cu, Ni,
Pc représente le radical d'une phtalocyanine,
u + v + w = 3,4 à 4,0, sous réserve que
u = 0,8 à 2,0,
v = 0 à 1,0,
w = 1,0 à 3,0 et
A a les significations indiquées ci-dessus,
R¹⁴ a les significations indiquées ci-dessus,
R¹⁵ et R¹⁶ représentent chacun H, un groupe alkyle en C₁-C₂ éventuellement substitué par OH, OSO₃H, SO₃H ou COOH ; 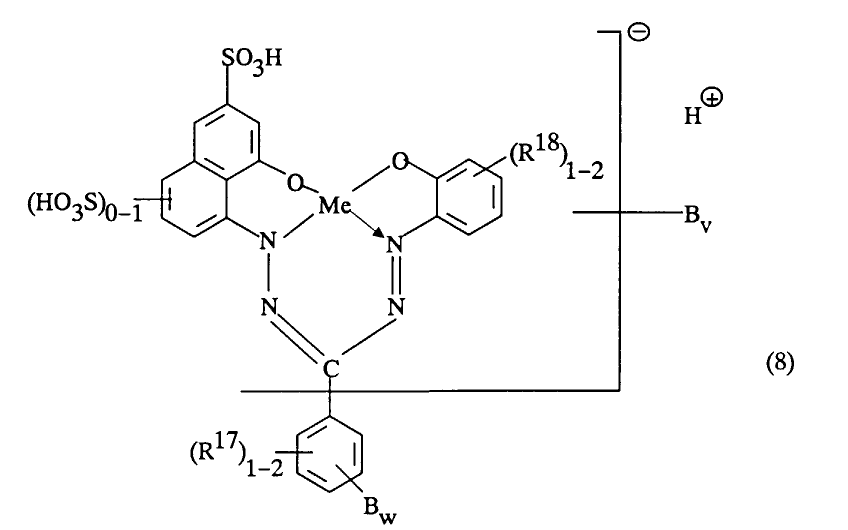 dans laquelle
v, w = 0 ou 1, mais w et v sont différents,
R¹⁸ et R¹⁷ représentent chacun, indépendamment l'un de l'autre, H, un groupe alkyle en C₁-C₄, alcoxy en C₁-C₄, OH, un halogène, un groupe COOH, NO₂, SO₃H, sulfonamido, (alkyle en C₁-C₄)catbonylamino, phénylcarbonylamino éventuellement substitué, alkylsulfonylamino en C₁-C₄, phénylsulfonylamino éventuellement substitué.

6. Colorants réactifs selon revendication 5,
pour lesquels
X = F,
i = 0,
j = 0 ou 1,
Z = CH₂-CH₂-OSO₃H, CH=CH₂,
R² = H.

7. Colorants réactifs selon revendication 5 pour lesquels
X = F
i = 0
j = 0
Z = CH₂-CH₂-OSO₃H
R² = H.

8. Procédé de préparation des colorants réactifs selon au moins une ou plusieurs des revendications qui précèdent
a) par condensation de colorants de formule 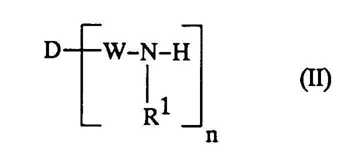 dans laquelle
D, W, R¹ et n ont les significations indiquées dans la revendication 1, avec n moles d'une trihalogénotriazine de formule 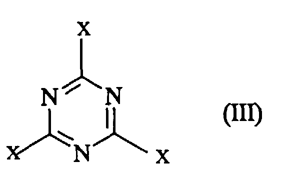 dans laquelle
X = F,Cl,Br,
ce qui donne des composés de formule 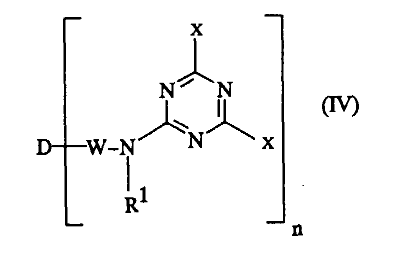 qu'on condense avec n moles de composants de formule 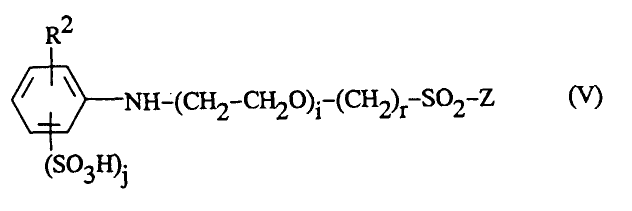 dans laquelle
r, i, j, R² et Z ont les significations indiquées dans la revendication 1, ou bien
b) dans l'ordre inverse, par condensation de trihalogénotriazines de formule (III) avec les composants de formule (V), donnant les produits de condensation primaires 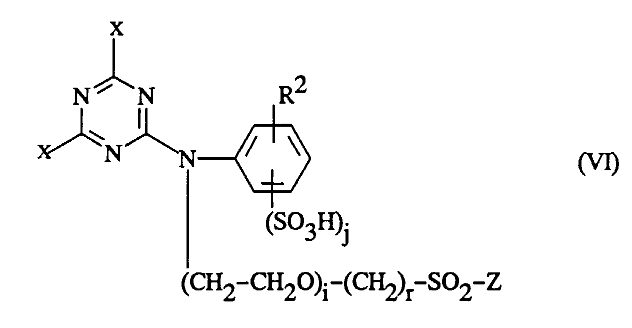 pour lesquels
X = F, Cl, Br et
r, i, j, R₂ et Z ont les significations indiquées dans la revendication 1, suivie de la condensation de n moles des composés de formule (VI) avec les colorants de formule (II),
ou bien
c) par condensation de produits précurseurs appropriés avec les trihalogénotriazines (III) et les composants de formule (V) ou par condensation de produits précurseurs appropriés avec les produits de condensation primaires de formule (VI) suivie de la synthèse du colorant.

9. Procédé pour la teinture ou l'impression de matières contenant de la cellulose ou des groupes polyamides par un colorant réactif, caractérisé en ce que l'on utilise un colorant réactif selon au moins une des revendications qui précèdent.

10. Composés de formule générale 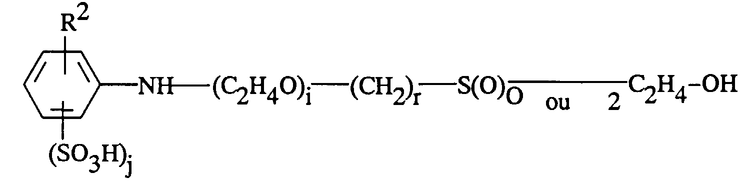 ou 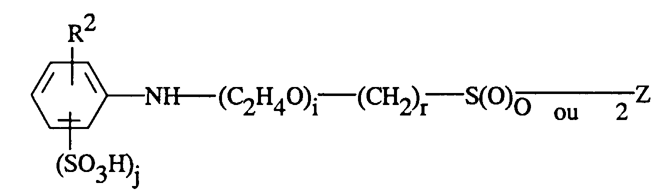 y compris leurs sels et leurs produits de réaction portant des groupes protecteurs,
R², Z, j, i et r ayant les significations indiquées dans la revendication 1, à l'exception du composé de formule

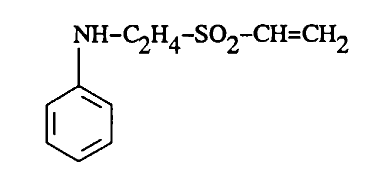

11. Procédé de préparation des composés selon revendication 10 par sulfatation de composés de formule 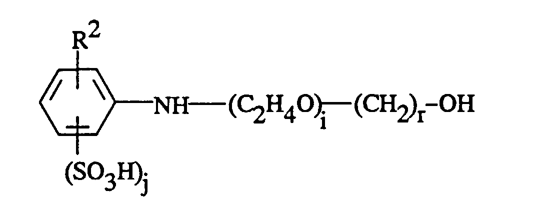 suivi d'une réaction avec le mercaptoéthanol, donnant 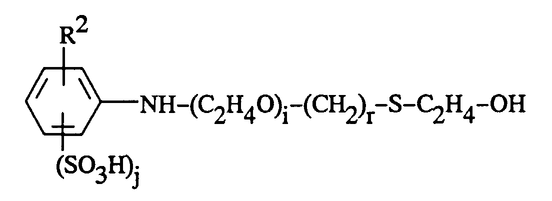 le cas échéant blocage du groupe NH par un groupe protecteur et oxydation en 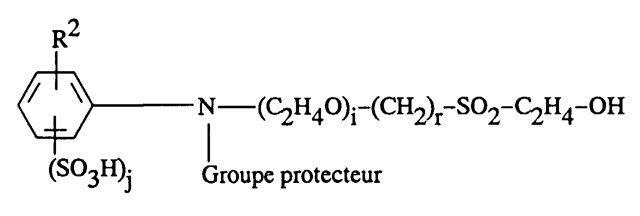 le cas échéant scission du groupe protecteur, donnant 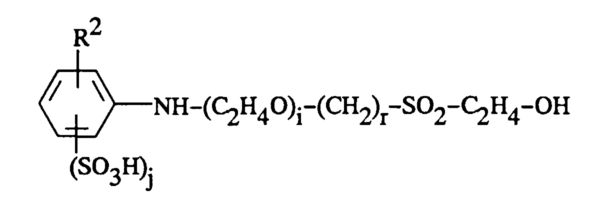 et le cas échéant conversion dans les conditions habituelles du groupe SO₂C₂H₄-OH en le groupe vinylsulfonyle ou conversion du groupe -CH₂-CH₂-OH en les autres groupes scindables mentionnés en référence à Z dans la revendication 1.
